# EUROPEAN PATENT APPLICATION

(11) **EP 4 554 280 A1**
(43) Date of publication of application: **14.05.2025**
(21) Application number: 23851574.6
(22) Date of filing: 21.07.2023
(51) Int. Cl.: H04W 28/06

(54) **DATA PROCESSING METHOD AND APPARATUS**

(30) Priority: 09.08.2022 CN 202210952523
(71) Applicant: Huawei Technologies Co., Ltd., Shenzhen, Guangdong 518129 (CN)
(72) Inventor: WANG, Jue, Shenzhen, Guangdong 518129 (CN); FAN, Qiang, Shenzhen, Guangdong 518129 (CN); TANG, Xiaowei, Shenzhen, Guangdong 518129 (CN)
(74) Representative: Goddar, Heinz J.
(86) International application number: PCT/CN2023/108684
(87) International publication number: WO 2024/032352

(57) **Abstract**

A data processing method and an apparatus are provided. The method includes: A receive end obtains first indication information; and then updates, based on the first indication information, a value of a first variable maintained by an entity at the receive end to be greater than a maximum serial number indicated in the first indication information, where the first variable may indicate that a data unit whose serial number is greater than or equal to the value of the first variable is to be processed by the entity at the receive end; or updates, based on the first indication information, a value of a first variable maintained by an entity at the receive end to be equal to a maximum serial number indicated in the first indication information, where the first variable may indicate that a data unit whose serial number is greater than the value of the first variable is to be processed by the entity at the receive end. According to the method, effective improvement may be made on a limited process of a corresponding entity due to data unit discarding, and a delay in processing a data unit by the corresponding entity can be reduced.

## Description

This application claims priority to Chinese Patent Application No. 202210952523.0, filed with the China National Intellectual Property Administration on August 9, 2022 and entitled "DATA PROCESSING METHOD AND APPARATUS", which is incorporated herein by reference in its entirety.

### TECHNICAL FIELD

Embodiments of this application relate to the field of communication technologies, and in particular, to a data processing method and an apparatus.

### BACKGROUND

A user plane protocol stack of a 5th generation (5th generation, 5G) mobile communication system may include a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY).

For confidentiality of data transmission, security protection needs to be performed on data transmitted over a radio air interface, including operations such as encryption and integrity protection. In 5G new radio (new radio, NR), a security protection function may be performed at a PDCP layer. An RLC layer is mainly responsible for dividing an RLC service data unit (service data unit, SDU) from the PDCP layer into RLC protocol data units (protocol data unit, PDU) of appropriate sizes. For example, SDU (or PDU) discarding may occur when at least one of a PDCP entity and an RLC entity processes an SDU (or a PDU).

However, the discarded SDU (or PDU) may affect a processing process of the corresponding entity.

### SUMMARY

Embodiments of this application provide a data processing method and an apparatus, to make effective improvement on a limited process of a corresponding entity due to data unit discarding, and effectively reduce a delay in processing a data unit by the corresponding entity.

According to a first aspect, an embodiment of this application provides a data processing method. The method includes:
a receive end obtains first indication information, where the first indication information indicates a maximum serial number of one or more data units that are discarded; and updates a value of a first variable maintained by an entity at the receive end to be greater than the maximum serial number, where the first variable indicates that a data unit whose serial number is greater than or equal to the value of the first variable is to be processed by the entity at the receive end; or updates a value of a first variable maintained by an entity at the receive end to be equal to the maximum serial number, where the first variable indicates that a data unit whose serial number is greater than the value of the first variable is to be processed by the entity at the receive end.

Regardless of whether a transmit end discards one or more data units or the receive end discards one or more data units, the entity at the receive end needs to maintain the first variable based on a serial number of a data unit received by the entity at the receive end. If the data unit is discarded, but the entity at the receive end fails to obtain in time the maximum serial number of the data unit that has been discarded, and cannot update, based on the discarded data unit, the first variable maintained by the entity at the receive end, a process in which the entity at the receive end delivers a data unit to an upper layer is limited, and a processing delay is increased. According to the solution provided in this embodiment of this application, the receive end updates, based on the maximum serial number indicated in the first indication information, the value of the first variable maintained by the receive end to be greater than the maximum serial number, or the receive end updates, based on the maximum serial number indicated in the first indication information, the value of the first variable maintained by the receive end to be equal to the maximum serial number. This makes effective improvement on a slow process, due to impact of the discarded data unit, of the entity at the receive end in processing a data unit, and effectively improves a processing progress of the receive end.

In a possible implementation, serial numbers of a plurality of data units are continuous.

In a possible implementation, the method further includes: when the value of the first variable is updated to be greater than the maximum serial number, discarding a data unit whose serial number is less than the value of the first variable; or when the value of the first variable is updated to be equal to the maximum serial number, discarding a data unit whose serial number is less than or equal to the value of the first variable.

In this embodiment of this application, the data unit whose serial number is less than or equal to the value of the first variable is discarded, so that a buffer of the entity at the receive end can be accurately cleared.

In a possible implementation, the updating a value of a first variable maintained by an entity at the receive end to be greater than the maximum serial number includes: updating the value of the first variable maintained by the entity at the receive end to a serial number that is greater than the maximum serial number and that is of a 1^{st} data unit whose reassembly is not completed; or updating the value of the first variable maintained by the entity at the receive end to a serial number that is greater than the maximum serial number and that is of a 1^{st} discontinuous data unit not delivered to an upper layer.

In a possible implementation, that the first variable indicates that a data unit whose serial number is greater than or equal to the value of the first variable is to be processed by the entity at the receive end includes: The first variable indicates that the data unit whose serial number is greater than or equal to the value of the first variable is to be reassembled by the entity at the receive end. Alternatively, the first variable indicates that the data unit whose serial number is greater than or equal to the value of the first variable is to be delivered by the entity at the receive end to the upper layer.

In a possible implementation, that the first variable indicates that a data unit whose serial number is greater than the value of the first variable is to be processed by the entity at the receive end includes: The first variable indicates that the data unit greater than the value of the first variable is to be reassembled by the entity at the receive end. Alternatively, the first variable indicates that the data unit whose serial number is greater than the value of the first variable is to be delivered by the entity at the receive end to the upper layer.

In a possible implementation, that a receive end obtains first indication information includes: The receive end receives the first indication information.

In this embodiment of this application, when discarding one or more data units, an entity at the transmit end may send the first indication information to the receive end. Therefore, when receiving the first indication information, the receive end may effectively update the value of the first variable in time based on the first indication information, ensuring that the receive end can perform a data processing process smoothly.

In a possible implementation, that a receive end obtains first indication information includes: The receive end determines to discard the one or more data units, and determines the first indication information.

In this embodiment of this application, when the entity at the receive end determines to discard one or more data units, the receiving entity may independently determine the first indication information, so that the entity at the receive end can update the value of the first variable of the entity at the receive end in time, ensuring that the receive end can perform a data processing process smoothly.

In a possible implementation, that the first indication information indicates a maximum serial number of one or more data units that are discarded includes: The first indication information indicates a serial number of a data unit set to which the one or more data units that are discarded belong.

In this embodiment of this application, the one or more data units may belong to one data unit set, or the plurality of data units may belong to a plurality of data unit sets. Therefore, the first indication information may indicate a serial number of a discarded data unit set.

In a possible implementation, the method further includes: obtaining the serial number of the discarded data unit set; and determining a maximum serial number of the plurality of data units based on the serial number of the discarded data unit set.

In a possible implementation, the entity at the receive end includes at least one of a packet data convergence protocol PDCP entity and a radio link control RLC entity.

In a possible implementation, that the first indication information indicates a maximum serial number of one or more data units that are discarded includes: The first indication information indicates a maximum sequence number (sequence number, SN) of the one or more data units that are discarded. Alternatively, the first indication information indicates a maximum count value of the one or more data units that are discarded.

In a possible implementation, the method further includes: The entity at the receive end sends second indication information, where the second indication information indicates the entity at the transmit end to discard the one or more data units, or the second indication information indicates the entity at the transmit end to discard a data unit set corresponding to the one or more data units.

In this embodiment of this application, the receive end sends the second indication information to the transmit end, so that the entity at the transmit end can clear a buffer based on the second indication information.

According to a second aspect, an embodiment of this application provides a data processing method. The method includes: triggering a buffer status report (buffer status report, BSR) when a data unit set is discarded, where the buffer status report includes a buffered data volume of a logical channel queue after the data unit set is discarded; and sending the BSR.

In a possible implementation, the triggering a buffer status report BSR when a data unit set is discarded includes: triggering the BSR when the data unit set is discarded and a variable value of a buffered data volume of a logical channel or a logical channel group is greater than or equal to a first threshold.

According to a third aspect, an embodiment of this application provides a communication apparatus. The apparatus includes:
a processing unit, configured to obtain first indication information, where the first indication information indicates a maximum serial number of one or more data units that are discarded, where the processing unit is further configured to update a value of a first variable maintained by an entity of the communication apparatus to be greater than the maximum serial number, where the first variable indicates that a data unit whose serial number is greater than or equal to the value of the first variable is to be processed by the entity of the communication apparatus; or the processing unit is further configured to update a value of a first variable maintained by an entity of the communication apparatus to be equal to the maximum serial number, where the first variable indicates that a data unit greater than the value of the first variable is to be processed by the entity of the communication apparatus.

In a possible implementation, the processing unit is further configured to: when the value of the first variable is updated to be greater than the maximum serial number, discard a data unit whose serial number is less than the value of the first variable; or when the value of the first variable is updated to be equal to the maximum serial number, discard a data unit whose serial number is less than or equal to the value of the first variable.

In a possible implementation, the processing unit is specifically configured to: update the value of the first variable maintained by the entity of the communication apparatus to a serial number that is greater than the maximum serial number and that is of a 1^{st} data unit whose reassembly is not completed; or update the value of the first variable maintained by the entity of the communication apparatus to a serial number that is greater than the maximum serial number and that is of a 1^{st} discontinuous data unit not delivered to an upper layer.

In a possible implementation, the first variable indicates that the data unit whose serial number is greater than or equal to the value of the first variable is to be reassembled by the entity of the communication apparatus. Alternatively, the first variable indicates that the data unit whose serial number is greater than or equal to the value of the first variable is to be delivered by the entity of the communication apparatus to the upper layer.

In a possible implementation, the first variable indicates that the data unit greater than the value of the first variable is to be reassembled by the entity of the communication apparatus. Alternatively, the first variable indicates that the data unit whose serial number is greater than the value of the first variable is to be delivered by the entity of the communication apparatus to the upper layer.

In a possible implementation, the apparatus further includes a transceiver unit. The processing unit is specifically configured to receive the first indication information via the transceiver unit.

In a possible implementation, the processing unit is specifically configured to: determine to discard the one or more data units, and determine the first indication information.

In a possible implementation, that the first indication information indicates a maximum serial number of one or more data units that are discarded includes: The first indication information indicates a serial number of a data unit set to which the one or more data units that are discarded belong.

In a possible implementation, the processing unit is further configured to: obtain a serial number of a discarded data unit set; and determine a maximum serial number of a plurality of data units based on the serial number of the discarded data unit set.

In a possible implementation, the entity of the communication apparatus includes at least one of a packet data convergence protocol PDCP entity and a radio link control RLC entity.

In a possible implementation, that the first indication information indicates a maximum serial number of one or more data units that are discarded includes: The first indication information indicates a maximum sequence number SN of the one or more data units that are discarded. Alternatively, the first indication information indicates a maximum count value of the one or more data units that are discarded.

In a possible implementation, the transceiver unit is further configured to send second indication information, where the second indication information indicates an entity at a transmit end to discard the one or more data units, or the second indication information indicates an entity at a transmit end to discard a data unit set corresponding to the one or more data units.

According to a fourth aspect, an embodiment of this application provides a communication apparatus. The apparatus includes:
a processing unit, configured to trigger a buffer status report (buffer status report, BSR) when a data unit set is discarded, where the buffer status report includes a buffered data volume of a logical channel queue after the data unit set is discarded; and
a transceiver unit, configured to send the BSR.

In a possible implementation, the triggering a buffer status report BSR when a data unit set is discarded includes: triggering the BSR when the data unit set is discarded and a variable value of a buffered data volume of a logical channel or a logical channel group is greater than or equal to a first threshold.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal, and/or send a signal. For example, the transceiver may be configured to receive a data unit. For example, the transceiver may be configured to receive first indication information. For example, the transceiver may be configured to send second indication information.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal, and/or send a signal. For example, the transceiver may be configured to receive a data unit. For example, the transceiver may be configured to send a BSR.

According to a seventh aspect, an embodiment of this application provides a communication apparatus. The communication apparatus includes a logic circuit and an interface. The logic circuit is coupled to the interface. The interface is configured to obtain first indication information. The logic circuit is configured to update, based on the first indication information, a value of a first variable maintained by an entity of the communication apparatus to be greater than or equal to a maximum serial number.

According to an eighth aspect, an embodiment of this application provides a communication apparatus. The communication apparatus includes a logic circuit and an interface. The logic circuit is configured to trigger a BSR when a data unit set is discarded. The interface is configured to output the BSR.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a tenth aspect, an embodiment of this application provides a computer-readable storage medium.

The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code (which may also be referred to as instructions). When the computer program or the computer code is run on a computer, the method according to any one of the first aspect or the possible implementations of the first aspect is performed.

According to a twelfth aspect, an embodiment of this application provides a computer program product. The computer program product includes a computer program or computer code (which may also be referred to as instructions). When the computer program or the computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a communication system. The communication system includes a transmit end and a receive end. The receive end is configured to perform the method according to any one of the first aspect or the possible implementations of the first aspect. The transmit end is configured to send first indication information. Alternatively, the transmit end is configured to receive second indication information.

According to a sixteenth aspect, an embodiment of this application provides a communication system. The communication system includes a terminal device and a network device. The terminal device is configured to perform the method according to any one of the second aspect or the possible implementations of the second aspect. The network device is configured to receive a BSR.

### BRIEF DESCRIPTION OF DRAWINGS

FIG. 1 is a diagram of an architecture of a communication system according to an embodiment of this application;
FIG. 2a is a diagram of a structure of a user plane protocol stack according to an embodiment of this application;
FIG. 2b is a diagram of a structure of another user plane protocol stack according to an embodiment of this application;
FIG. 3a is a diagram of a process in which a receiving PDCP entity maintains variables according to an embodiment of this application;
FIG. 3b is a diagram of a process in which a receiving unacknowledged mode (unacknowledged mode, UM) RLC entity maintains variables according to an embodiment of this application;
FIG. 3c is a diagram of a process in which an acknowledged mode (acknowledged mode, AM) RLC entity transmit end maintains variables according to an embodiment of this application;
FIG. 3d is a diagram of a process in which an AM RLC entity receive end maintains variables according to an embodiment of this application;
FIG. 4 is a schematic flowchart of a data processing method according to an embodiment of this application;
FIG. 5a is a diagram of a data processing scenario according to an embodiment of this application;
FIG. 5b is a diagram of a data processing scenario according to an embodiment of this application;
FIG. 5c is a diagram of a data processing scenario according to an embodiment of this application;
FIG. 6 is a schematic flowchart of a data processing method according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of this application clearer, the following further describes this application with reference to the accompanying drawings.

Terms "first", "second", and the like in the specification, claims, and accompanying drawings of this application are merely used to distinguish between different objects, and are not used to describe a specific order. In addition, terms such as "include" and "have" and any variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, or devices.

The "embodiment" mentioned in this specification means that specific features, structures, or characteristics described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. Certainly, when A and B are not mutually exclusive, "or" may indicate that three relationships exist, for example, only A exists, only B exists, and both A and B exist. The character "/" generally indicates an "or" relationship between the associated objects. "At least one of the following items (pieces)" or a similar expression means any combination of these items. For example, at least one of a, b, or c may represent: a, b, c, "a and b", "a and c", "b and c", or "a and b and c".

The technical solutions provided in embodiments of this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system emerging in future communication development, such as a 6th generation (6th generation, 6G) communication system.

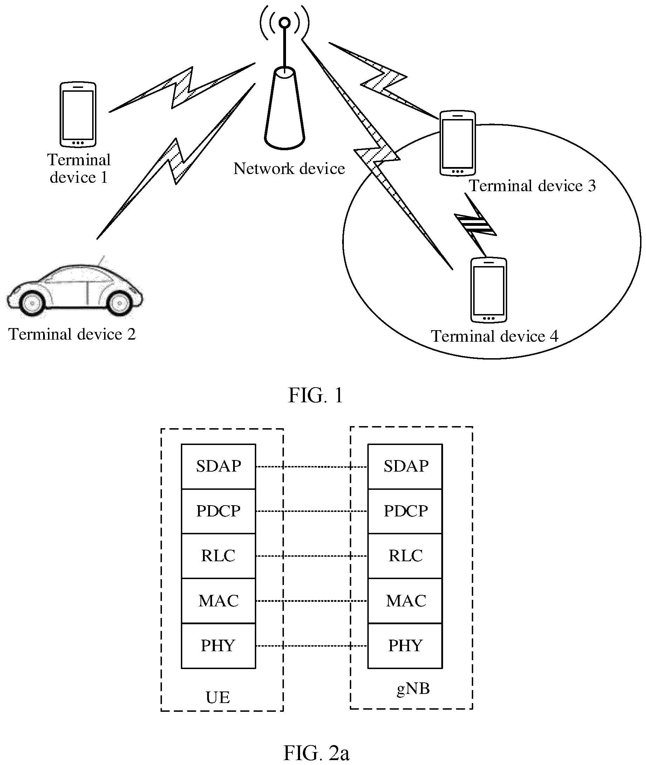

The technical solutions provided in embodiments of this application may also be applied to non-terrestrial network (non-terrestrial network, NTN) communication (which may also be referred to as non-terrestrial network communication), machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication modes in an internet of vehicles system are collectively referred to as vehicle-to-everything (vehicle-to-everything, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 shown below, terminal devices may communicate with each other by using the D2D technology, the M2M technology, the V2X technology, or the like.

The technical solutions provided in embodiments of this application may be further applied to a wireless local area network (wireless local area network, WLAN) system, for example, Wi-Fi. For example, a method provided in embodiments of this application is applicable to the institute of electrical and electronics engineers (institute of electrical and electronics engineers, IEEE) 802.11 series protocols, such as the 802.11a/b/g protocol, the 802.11n protocol, the 802.11ac protocol, the 802.11ax protocol, the 802.11be protocol, or a next-generation protocol, which are not enumerated one by one herein. For another example, the method is also applicable to a wireless personal area network (wireless personal area network, WPAN) that is based on an ultra wideband (ultra wideband, UWB) technology, such as the 802.15.4a protocol, the 802.15.4z protocol, and the 802.15.4ab protocol in the IEEE 802.15 series protocols, and a future generation of UWB WPAN protocol. Other applicable protocols are not enumerated herein. A person skilled in the art easily understands that various aspects in embodiments of this application may be extended to other networks using various standards or protocols, for example, Bluetooth (Bluetooth), a high performance radio LAN (high performance radio LAN, HIPERLAN) (which is a wireless standard similar to the IEEE 802.11 standard, and is mainly used in Europe), a wide area network (WAN), or other networks known or developed in the future. Therefore, regardless of a coverage area and a wireless access protocol that are used, the technical solutions provided in embodiments of this application are applicable to any suitable wireless network.

FIG. 1 is a diagram of an architecture of a communication system according to an embodiment of this application. As shown in FIG. 1, the communication system may include at least one network device and at least one terminal device, for example, a terminal device 1 to a terminal device 4 in FIG. 1. For example, the terminal device 3 and the terminal device 4 shown in FIG. 1 may directly communicate with each other. For example, terminal devices may directly communicate with each other by using a D2D technology. The terminal device 1 to the terminal device 4 each may communicate with the network device. It may be understood that the terminal device 3 and the terminal device 4 may directly communicate with the network device, or may indirectly communicate with the network device, for example, communicate with the network device via another terminal device (not shown in FIG. 1). It should be understood that FIG. 1 shows an example of one network device, a plurality of terminal devices, and communication links between communication devices. Optionally, the communication system may include a plurality of network devices, and another quantity of terminal devices, for example, more or fewer terminal devices, may be included in a coverage area of each network device. This is not limited in this embodiment of this application. The following details the terminal device and the network device.

The terminal device is an apparatus having wireless sending and receiving functions. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted device; or may be deployed on the water (for example, a ship). In a possible implementation, the terminal device may be a handheld device having a wireless communication function, a vehicle-mounted device, a wearable device, a sensor, a terminal in an internet of things, a terminal in an internet of vehicles, an uncrewed aerial vehicle, a terminal device in any form in a 5G network or a future network, or the like. This is not limited in this embodiment of this application. It may be understood that the terminal device described in this embodiment of this application may include a vehicle (for example, a car) in the internet of vehicles, and may also include a vehicle-mounted device, a vehicle-mounted terminal, or the like in the internet of vehicles. A specific form of the terminal device used in the internet of vehicles is not limited in this embodiment of this application. It may be understood that the terminal devices described in this embodiment of this application may communicate with each other by using D2D, V2X, M2M, or the like. A communication method between the terminal devices is not limited in this embodiment of this application.

The network device may be an apparatus that is deployed in the radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having wireless sending and receiving functions, and includes but is not limited to the base station shown above (including a base station deployed on a satellite). Alternatively, the network device may be an apparatus that has a base station function in 6G. Optionally, the network device may be an access node, a wireless relay node, a wireless backhaul node, or the like in a wireless local area network (wireless fidelity, Wi-Fi) system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (or referred to as a transmission point), or the like. It may be understood that the network device may alternatively be a base station, a satellite, or the like in a future evolved public land mobile network (public land mobile network, PLMN). The network device may alternatively be a communication apparatus or the like functioning as a base station in a non-terrestrial communication system, D2D, V2X, or M2M. A specific type of the network device is not limited in this embodiment of this application. In systems using different radio access technologies, names of communication apparatuses having network device functions may be different, and are not enumerated in this embodiment of this application. Optionally, in some deployments of the network device, the network device may include a central unit (central unit, CU), a distributed unit (distributed unit, DU), and the like. The network device including the CU and the DU may be understood as splitting protocol layers of an eNB in an LTE system. Functions of some protocol layers are centrally controlled by the CU, functions of some or all remaining protocol layers are distributed in the DU, and the CU centrally controls the DU. In some other deployments of the network device, a CU may be further divided into a CU-control plane (control plane, CP), a CU-user plane (user plane, UP), and the like. In still some deployments of the network device, the network device may alternatively be an open radio access network (open radio access network, ORAN) architecture or the like. A specific deployment manner of the network device is not limited in this embodiment of this application.

Network architectures and service scenarios that are described in embodiments of this application are intended to describe the technical solutions in embodiments of this application more clearly, but do not constitute any limitation on the technical solutions provided in embodiments of this application. A person skilled in the art may know that with the evolution of network architectures and emergence of new service scenarios, the technical solutions provided in embodiments of this application are also applicable to similar technical problems.

The following first describes a protocol stack in embodiments of this application.

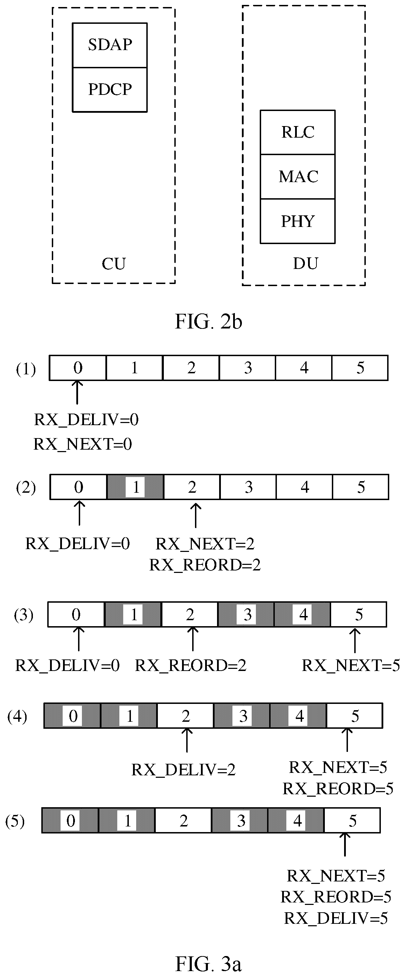

In an example, FIG. 2a is a diagram of a structure of a user plane protocol stack according to an embodiment of this application. As shown in FIG. 2a, user plane protocol stacks of UE and a gNB may include at least one of the following: a SDAP, a PDCP, RLC, MAC, and PHY. In another example, FIG. 2b is a diagram of a structure of another user plane protocol stack according to an embodiment of this application. As shown in FIG. 2b, a SDAP and a PDCP are deployed on a CU, and RLC, MAC, and PHY are deployed on a DU. The CU and the DU may be connected through an F1 interface. The CU represents a gNB and is connected to a core network through an NG interface. The CU represents the gNB and is connected to another gNB through an Xn interface.

It may be understood that the user plane protocol stacks shown in FIG. 2a and FIG. 2b are merely examples. As a standard progresses, the user plane protocol stack may change, and any user plane protocol stack by which a communication apparatus can perform a method provided in embodiments of this application falls within the protection scope of embodiments of this application. Functions implemented by each protocol layer shown in FIG. 2a and FIG. 2b may be implemented by an entity at the corresponding protocol layer. A protocol layer and an entity (an entity corresponding to the protocol layer) described below may be understood as being in correspondence or interchangeable.

FIG. 2a is used as an example. When the UE sends a data unit (that is, the UE serves as a transmit end), each entity (entity) of the UE may process an obtained SDU, and then deliver, to a next layer, a PDU obtained through processing. For example, after receiving a PDCP SDU from an upper layer, a transmitting PDCP entity may perform at least one of the following operations: allocating a PDCP SN, performing header compression, encryption, and integrity protection, adding a PDCP header to generate a PDCP PDU, and delivering the PDCP PDU to a lower layer for sending over an air interface. When the gNB receives a data unit (that is, the gNB serves as a receive end), each entity of the gNB may process an obtained PDU, and then deliver, to an upper layer, an SDU obtained through processing. For example, after receiving a PDCP PDU from a lower layer, a receiving PDCP entity may perform at least one of the following operations: removing a PDCP header, performing decryption and integrity protection verification, performing duplicate detection, and finally delivering an obtained SDU to an upper layer. The processing manner described above is merely an example. In addition, each protocol layer in the user plane protocol stacks shown in FIG. 2a and FIG. 2b processes an SDU (or a PDU). For a specific processing manner, refer to a related standard or protocol.

According to the user plane protocol stack described above, for the transmit end, a function implemented by each protocol layer may be understood as processing an obtained SDU and delivering a PDU to a lower layer; and for the receive end, a function implemented by each protocol layer may be understood as processing an obtained PDU and delivering an SDU to an upper layer. Therefore, for brevity, the SDU and the PDU are not distinguished below, and are uniformly represented by using a data unit. For example, the data unit may include any one of the following: a PDCP SDU, an RLC SDU, a PDCP PDU, and an RLC PDU. Certainly, the PDCP and the RLC described herein are merely examples, and other protocol layers in the user plane protocol stack are not listed one by one. Alternatively, the data unit may be understood as a data packet or the like. A specific name of the data unit is not limited in this embodiment of this application.

**A PDCP** entity is described as follows.

In a mobile communication system, for confidentiality of data transmission, security protection needs to be performed on data transmitted over a radio air interface, including operations such as encryption and integrity protection. In 5G NR, a security protection function may be performed at a PDCP layer. Each radio bearer (radio bearer, RB) except a signaling radio bearer 0 (signaling radio bearer 0, SRB0) may correspond to one PDCP entity. A PDCP entity is associated with a control plane or a data plane, depending on whether an RB associated with the PDCP entity is an SRB or a data radio bearer (data radio bearer, DRB). The following uses a PDCP entity associated with a DRB as an example to describe processing procedures of a PDCP entity at the transmit end and a PDCP entity at the receive end.

For the PDCP entity at the transmit end, after receiving a data unit from an upper layer, the PDCP entity starts a discard timer corresponding to the data unit, and allocates a PDCP SN to the data unit. Optionally, the PDCP entity may further perform any one or more of the following: header compression, encryption, integrity protection, and addition of a PDCP header. Finally, a processed data unit is delivered to a lower layer for sending over an air interface. When a discard timer for a data unit expires, the PDCP entity discards the data unit (including a PDCP SDU and a corresponding PDCP PDU). If the data unit has been delivered to an RLC layer, the PDCP entity may indicate an RLC entity to discard the data unit. It should be noted that although the PDCP entity may indicate the RLC entity to discard the data unit, the data unit can be discarded only when the data unit and a segment of the data unit are not delivered to a MAC layer. In other words, as long as one SDU segment of the data unit is transmitted over the air interface, the RLC entity needs to transmit the entire data unit.

For the PDCP entity at the receive end, after receiving a data unit from the lower layer, the PDCP entity first removes a PDCP header, and performs decryption and integrity protection verification. If integrity protection verification fails, the PDCP entity reports a failure to the upper layer, and discards the data unit; or if integrity protection verification is successful, the PDCP entity performs duplicate detection, discards a duplicate data unit received due to retransmission or enabled PDCP duplication, and places a non-duplicate PDCP PDU in a receive buffer. If out-of- order delivery is configured for the PDCP entity, the PDCP entity delivers a processed data unit to an upper layer after performing header decompression (if necessary) on the data unit. If in-order delivery is configured for the PDCP entity, and the data unit is in order (that is, a serial number of a current data unit is a serial number of a previous delivered data unit plus 1), the PDCP entity delivers a processed data unit to the upper layer after performing header decompression on the data unit (if necessary); or if the data unit is out of order, the PDCP entity waits until the data unit is in order, and then delivers the data unit to the upper layer. For example, after a data unit with a serial number 100 is delivered to the upper layer, a data unit with a serial number 102 is received. Because 102 and 100 are discontinuous, the data unit with the serial number 102 is not delivered to the upper layer. After a data unit with a serial number 101 is received, the data unit with the serial number 101 and the data unit with the serial number 102 are delivered to the upper layer.

In an example, a PDCP entity configured with in-order delivery may maintain the following variables:
(1) RX_DELIV: a count (count or COUNT) value of a 1^{st} to-be-received data unit that is not delivered to the upper layer;
(2) RX_NEXT: equal to a maximum count value of a currently received data unit plus 1; and
(3) RX_REORD: equal to a value of RX_NEXT when a reordering timer (t-Reordering) is started.

After receiving a data unit from the lower layer, the PDCP entity may determine a count value of the data unit based on an SN in a PDCP header. For a method for determining the count value based on the SN in the PDCP header, refer to a related standard or protocol. Details are not described in this embodiment of this application. For example, the count value=[HFN, SN], where a value of a hyper frame number (hyper frame number, HFN) may satisfy any one of the following: If SN(RCVD_SN) is less than SN(RX_DELIV)-Window_Size, HFN=HFN(RX _DELIV)+1; if SN(RCVD_SN) is greater than or equal to SN(RX _DELIV)+Window_Size, HFN=HFN(RX _DELIV)-1; and if SN(RCVD_SN) is not less than SN(RX_DELIV)-Window_Size and is not greater than or equal to SN(RX _DELIV)+Window_Size, HFN=HFN(RX_DELIV). SN(RCVD_SN) represents an SN obtained when the PDCP entity receives a data unit. SN(RX_DELIV) represents an SN value of RX_DELIV when the PDCP entity receives the data unit. HFN(RX_DELIV) represents values of first four bits of the count value represented by RX_DELIV when the PDCP entity receives the data unit. For example, the count value may occupy eight bits, and the SN may occupy four bits.

A process in which the PDCP entity maintains the variables may be as follows.

When in-order delivery is required, if a count value of the currently received data unit is equal to RX_DELIV, the PDCP entity delivers data units to the upper layer one by one in ascending order of count values from the data unit until a discontinuous count value occurs, and the PDCP entity updates the variable RX_DELIV to a count value of a 1^{st} data unit that has not been delivered to the upper layer. For example, FIG. 3a is a diagram of a process in which a receiving PDCP entity maintains variables according to an embodiment of this application. (1) in FIG. 3a indicates an initial state, for example, RX _DELIV=0, and RX _NEXT=0. (2) in FIG. 3a indicates that the PDCP entity receives a data unit whose count value is 1, and in this case, updates RX_NEXT to 2. Because the PDCP entity has not received a data unit whose count value is 0, that is, the data unit whose count value is 0 has not been delivered to the upper layer, the value of RX_DELIV is still 0. In addition, because the value of RX_DELIV is less than the value of RX_NEXT, for example, the PDCP entity receives only the data unit whose count value is 1 but not the data unit whose count value is 0, and cannot sequentially deliver the data units to the upper layer in an order of 01, the PDCP entity may start the reordering timer, and the value of RX_REORD is equal to the value of RX_NEXT when the reordering timer is started, that is, RX_REORD=2. If receiving the data unit whose count value is 0 before the reordering timer expires, the PDCP entity may sequentially deliver the data unit whose count value is 0 and the data unit whose count value is 1 to the upper layer. It may be understood that the value of RX_DELIV being less than the value of RX_NEXT indicates that a data unit has not been received before a received data unit with a maximum count value, and a vacancy exists; or the value of RX_DELIV being equal to the value of RX_NEXT indicates that the PDCP entity receives data units whose count values are continuous, and does not need to start the reordering timer. (3) in FIG. 3a indicates that the PDCP entity receives a PDU whose count value is 3 and a PDU whose count value is 4, and in this case, updates RX_NEXT to 5. Because the PDCP entity has not received the data unit whose count value is 0, that is, the data unit whose count value is 0 has not been delivered to the upper layer, the value of RX_DELIV is still 0. (4) in FIG. 3a indicates that the PDCP entity receives the data unit whose count value is 0, and in this case, delivers the PDU whose count value is 0 and the PDU whose count value is 1, and updates RX_DELIV to 2. In this case, because the value of RX_DELIV is equal to the value of RX_REORD, the reordering timer is stopped and reset (which may be understood as that a condition for stopping the reordering timer is that the value of RX_DELIV is greater than or equal to the value of RX_REORD). Because one data unit is missing between the data unit whose count value is 1 and the data unit whose count value is 3 (which may also be understood as that the value of RX _DELIV is less than the value of RX_NEXT), the PDCP starts the reordering timer, where RX_REORD=5. When the reordering timer expires, the PDCP entity delivers, to the upper layer, all data units whose count values are less than RX_REORD and all data units whose count values are continuous and greater than or equal to RX_REORD in the receive buffer. In other words, when the reordering timer expires, as shown in (5) in FIG. 3a, the PDCP entity may deliver the data unit whose count value is 3 and the data unit whose count value is 4 to the upper layer, and update RX_DELIV to a count value of a 1^{st} data unit that has not been delivered to the upper layer, for example, RX_DELIV=5.

It can be learned from the diagram shown in FIG. 3a that when in-order delivery is configured for the PDCP entity, if the PDCP entity at the transmit end discards a data unit, count values in a receive window of the PDCP entity at the receive end are discontinuous, and the reordering timer is repeatedly triggered, consuming processing resources of the receive end. In addition, the PDCP entity can deliver a data unit to the upper layer only when the reordering timer expires, resulting in an increased processing delay of the receive end and impact on timely delivery of a subsequent data unit. Similarly, if the PDCP entity at the receive end discards a data unit, the count values in the receive window of the PDCP entity at the receive end are discontinuous, and the reordering timer is repeatedly triggered, consuming processing resources of the receive end. In addition, the PDCP entity can deliver a data unit to the upper layer only when the reordering timer expires, resulting in an increased processing delay of the receive end and impact on timely delivery of a subsequent data unit. It may be understood that the problem described herein is also applicable to a manner in which the transmit end or the receive end discards a data unit set. In other words, when the transmit end discards the data unit set, the foregoing case also occurs for the PDCP entity at the receive end; or when the receive end discards the data unit set, the foregoing case also occurs for the PDCP entity at the receive end.

An RLC entity is described as follows.

Based on a service type, a service mode of the RLC entity may include at least one of the following:
a transparent mode (transparent mode, TM): A data packet is transparently transmitted without processing and addition of a header, where a TM RLC entity is unidirectional, and is classified into a transmitting TM RLC entity and a receiving TM RLC entity;
an unacknowledged mode (unacknowledged mode, UM): supports segment reassembly and duplicate detection, where an UM RLC entity is unidirectional, and is classified into a transmitting UM RLC entity and a receiving UM RLC entity; and
an acknowledged mode (acknowledged mode, AM): supports segment reassembly, duplicate detection, and retransmission of a data packet, where an AM RLC entity is bidirectional, and is classified into an AM RLC entity transmit end and an AM RLC entity receive end.

"Unidirectional" described above may be understood as that an RLC entity may support in sending a data unit or receiving a data unit. "Bidirectional" may be understood as that an RLC entity may support in sending a data unit and receiving a data unit.

It may be understood that an RLC entity at a transmit end described in this embodiment of this application may include a transmitting UM RLC entity or an AM RLC entity transmit end, and an RLC entity at a receive end may include a receiving UM RLC entity or an AM RLC entity receive end. In other words, for ease of description, the RLC entity at the transmit end and the RLC entity at the receive end described below indicate that service modes are not distinguished, functions implemented or steps performed by the RLC entity at the transmit end are applicable to at least one of the transmitting UM RLC entity and the AM RLC entity transmit end, and functions implemented or steps performed by the RLC entity at the receive end are applicable to at least one of the receiving UM RLC entity and the AM RLC entity receive end.

After receiving a data unit from a PDCP layer, the RLC entity at the transmit end may add an RLC header to the data unit. After receiving a notification about a transmission opportunity sent by a MAC layer, the RLC entity at the transmit end checks whether a data volume of the data unit matches a size of the transmission opportunity; and if the data volume matches the size of the transmission opportunity, sends the data unit added with the RLC header to the MAC layer; or if a data volume of the data unit does not match a size of the transmission opportunity, segments the data unit, modifies the RLC header, adds information such as an SN to the RLC header, and sends the data unit to the MAC layer. It may be understood that SNs carried in SDU segments obtained by segmenting a same data unit are the same.

In an example, the receiving UM RLC entity may maintain the following variables:
(1) RX_Next_Highest: an upper bound of a reassembly window, whose variable value is equal to a maximum SN of a received data unit whose reassembly is not completed plus 1, where a lower bound of the reassembly window is RX_Next_Highest-UM_Window_Size, where UM_Window_Size indicates a size of the reassembly window, and may be a constant, and if an SN satisfies the following condition: (RX_Next_Highest-UM_Window_Size)<=SN<RX_Next_Highest, the SN falls within the reassembly window, or if an SN does not satisfy the following condition: (RX_Next_Highest-UM_Window_Size)<=SN<RX_Next_Highest, the SN falls outside the reassembly window;
(2) RX_Next_Reassembly: equal to an SN of a 1^{st} to-be-reassembled RLC SDU; and
(3) RX_Timer_Trigger: equal to the value of RX_Next_Highest when a reassembly timer (t-Reassembly) is started.

Optionally, a value of the variable maintained by the receiving UM RLC entity may range from 0 to 2^{SN-FieldLength}-1, where SN-FieldLength indicates a length of the SN.

It may be understood that a 1^{st} SN described in this embodiment of this application may be understood as an earliest SN, a minimum SN, or the like. In other words, the description of the 1^{st} SN may be replaced with the earliest SN or the minimum SN.

It should be noted that similar descriptions such as the "1^{st} SN", the "earliest SN", the "maximum SN", and an operation between the variables in this embodiment of this application all represent results of modulo operations. For example, if a value of a variable ranges from 0 to 511, and SNs of data units sequentially received by an entity are 0, 1, 2, and 3, the 1^{st} SN is 0, the earliest SN is 0, and the maximum SN is 3. For another example, if 510, 511, 0, 1, and 2 are sequentially received, the 1^{st} SN is 510, the earliest SN is 510, and the maximum SN is 2. It may be understood that the variable described herein may be understood as a variable maintained by the entity.

When receiving a data unit, the receiving UM RLC entity checks whether an RLC header of the data unit includes an SN. If the RLC header does not include the SN, it indicates that the data unit includes a complete RLC SDU, and the receiving UM RLC entity removes the RLC header of the data unit and delivers the data unit to an upper layer; or if the RLC header includes the SN, the receiving UM RLC entity further checks whether the SN of the data unit satisfies (RX_Next_Highest-UM_Window_Size)<=SN<RX_Next_Reassembly, and if the SN of the data unit satisfies (RX_Next_Highest-UM_Window_Size)<=SN<RX_Next_Reassembly, discards the data unit, or if the SN of the data unit does not satisfy (RX_Next_Highest-UM_Window_Size)<=SN<RX_Next_Reassembly, places the data unit in a receive buffer.

When an SDU segment included in the data unit can be reassembled into a complete RLC SDU with an existing SDU segment in the receive buffer, the receiving UM RLC entity delivers the complete RLC SDU obtained through reassembly to the upper layer. In this case, if the SN of the data unit is equal to RX_Next_Reassembly, the receiving UM RLC entity updates the variable RX_Next_Reassembly to an SN of a 1^{st} data unit whose SN is greater than current RX_Next_Reassembly and whose reassembly has not been completed. When an SDU segment included in the data unit cannot be reassembled into a complete RLC SDU with an existing SDU segment in the receive buffer, if the SN of the data unit is greater than or equal to RX_Next_Highest, the receiving UM RLC entity updates the variable RX_Next_Highest to be equal to the SN plus 1, and discards all RLC PDUs whose SNs fall outside the reassembly window. If RX_Next_Reassembly falls outside the reassembly window, the receiving UM RLC entity sets the variable RX_Next_Reassembly to an SN of a 1^{st} data unit whose SN is greater than RX_Next_Highest-UM_Window_Size and whose reassembly has not been completed.

The receiving UM RLC entity starts t-Reassembly and sets a value of the variable RX_Timer_Trigger to be equal to a current value of RX_Next_Highest when the reassembly timer t-Reassembly is not running and one of the following conditions is satisfied:
(1) RX_Next_Highest>RX_Next_Reassembly+1; and
(2) RX_Next_Highest=RX_Next_Reassembly+1 (that is, only reassembly of a data unit with an SN=RX_Next_Reassembly has not been completed), and there is an SDU segment that has not been received before a last byte of the currently received data unit with the SN=RX_Next_Reassembly.

When the reassembly timer t-Reassembly expires, the receiving UM RLC entity sets the variable RX_Next_Reassembly to an SN of a 1^{st} data unit whose SN is greater than RX_Timer_Trigger and whose reassembly has not been completed, and discards segments of all SDUs in the receive buffer whose SNs are less than RX_Next_Reassembly.

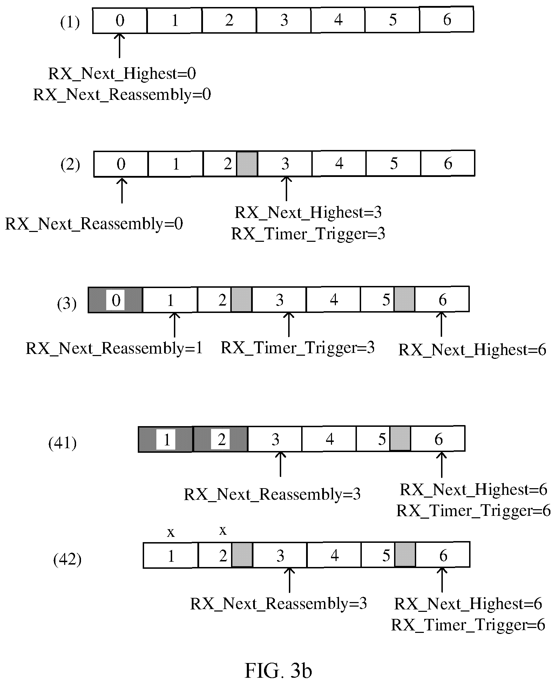

For example, FIG. 3b is a diagram of a process in which the receiving UM RLC entity maintains the variables according to an embodiment of this application. (1) in FIG. 3b indicates an initial state in which the receiving UM RLC entity has not received any data unit. (2) in FIG. 3b indicates that the receiving UM RLC entity receives an SDU segment whose SN is 2, and in this case, updates the upper bound of the reassembly window, so that the variable value of the upper bound of the reassembly window is equal to the maximum SN of the received data unit whose reassembly is not completed (here, the maximum SN is 2) plus 1, that is, RX_Next_Highest=3. Based on the foregoing described condition for starting the reassembly timer, because RX_Next_Highest (that is, 3)>RX_Next_Reassembly (that is, 0)+1, the receiving UM RLC entity starts the reassembly timer, and the value of RX_Timer_Trigger is equal to the value of RX_Next_Highest when the reassembly timer is restarted, that is, RX_Timer_Trigger=3. (3) in FIG. 3b indicates that reassembly of a data unit with an SN=0 is completed, the data unit with the SN=0 is delivered to an upper layer, and the variable RX_Next_Reassembly is updated to 1. In addition, the receiving UM RLC entity receives an SDU segment of a data unit whose SN is 5, and in this case, updates the upper bound of the reassembly window, so that the variable value of the upper bound of the reassembly window is equal to the maximum SN of the received data unit whose reassembly is not completed (here, the maximum SN is 5) plus 1, that is, RX_Next_Highest=6. (41) in FIG. 3b indicates that when the reassembly timer does not expire, if reassembly of an RLC SDU with an SN=1 and an RLC SDU with an SN=2 is completed, the receiving UM RLC entity delivers the RLC SDUs to the upper layer, and updates RX_Next_Reassembly to 3. Because RX_Timer_Trigger (=3)<=RX_Next_Reassembly (=3), the reassembly timer is stopped and reset. Because RX_Next_Highest>RX_Next_Reassembly+1, the reassembly timer is started, and RX_Timer_Trigger=6. (42) in FIG. 3b indicates that when the reassembly timer expires, if reassembly of a data unit with an SN=1 and a data unit with an SN=2 has not been completed, the receiving UM RLC discards buffered SDU segments with the SN=1 and the SN=2, and updates the variables maintained by the receiving UM RLC entity and the reassembly timer. It may be understood that for ease of differentiation, (41) and (42) are respectively used to represent parallel solutions in FIG. 3b.

It can be learned from (3) in FIG. 3b that a condition for updating RX_Next_Reassembly by the UM RLC entity includes that the UM RLC entity completes reassembly of the data unit with the SN=RX_Next_Reassembly. It can be learned from (42) in FIG. 3b, the condition for updating RX_Next_Reassembly by the UM RLC entity includes expiration of the reassembly timer.

It can be learned from the foregoing that if the transmit end discards a data unit, an UM RLC entity at the receive end keeps waiting for the data unit until the reassembly timer expires. As a result, a delay in processing a data unit by the UM RLC entity at the receive end increases.

In another example, the AM RLC entity transmit end maintains the following variables:
(1) TX_Next_Ack: For data units whose SNs are less than TX_Next_Ack, the AM RLC entity transmit end has received an acknowledgment message, from the receive end, indicating that the data units have been successfully received, where the AM RLC entity transmit end maintains a transmit window with a size of [TX_Next_Ack, TX_Next_Ack+AM_Window_Size), and only a PDU whose SN is within the transmit window can be sent, where AM_Window_Size indicates a size of the transmit window; and
(2) TX_Next: an SN allocated to a next newly generated data unit.

After receiving a data unit from a higher layer, the AM RLC entity transmit end sets an SN of the data unit to TX_Next, adds an RLC header, and updates a value of TX_Next. After receiving a notification about a transmission opportunity from the MAC layer, the AM RLC entity transmit end segments the data unit based on a size of the transmission opportunity if necessary, modifies the RLC header, and then delivers a processed data unit to the MAC layer. If receiving an acknowledgment message for the data unit from the receive end, the AM RLC entity transmit end indicates to the higher layer that the data unit is successfully sent, and updates the variable TX_Next_Ack to an SN of a next data unit that has not been acknowledged.

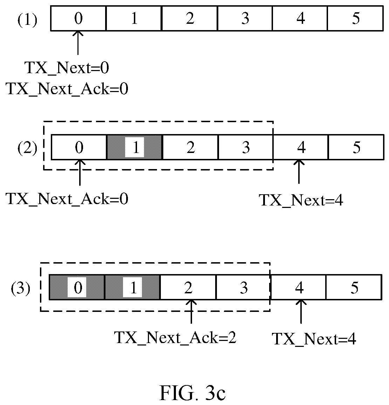

For example, FIG. 3c is a diagram of a process in which the AM RLC entity transmit end maintains the variables according to an embodiment of this application. (1) in FIG. 3c may be understood as an initial state, that is, TX_Next=0, and TX_Next_Ack=0. (2) in FIG. 3c indicates that the AM RLC entity transmit end has sent a data unit with an SN=0 to a data unit with an SN=3, and the receive end has acknowledged that a data unit with an SN=1 is successfully received. Therefore, the AM RLC entity transmit end updates a value of TX_Next to 4, and a value of TX_Next_Ack is still 0. (3) in FIG. 3c indicates that the receive end has acknowledged that the data unit with the SN=0 is successfully received, and in this case, the AM RLC entity transmit end updates the variable TX_Next_Ack to 2.

In still another example, the AM RLC entity receive end maintains the following variables:
(1) RX_Next: It is considered that reassembly of all RLC SDUs whose SNs are less than RX_Next has been completed;
(2) RX_Next_Highest: a maximum SN of a received data unit plus 1;
(3) RX_Next_Status_Trigger: whose variable value is equal to a value of RX_Next_Highest when a reassembly timer (t-Reassembly) is triggered; and
(4) RX_Highest_Status: a possible maximum value of an "ACK_SN" field in a status report.

The AM RLC entity receive end maintains a receive window [RX_Next, RX_Next+AM_Window_Size), and the receive end receives only a PDU whose SN is within the receive window. After receiving a data unit, the AM RLC entity receive end discards the data unit if an SN of the data unit is not within the receive window or the entire data unit is a duplicate of a data unit that is successfully received before, or discards some duplicate SDU segments in the data unit if the SDU segments are duplicates of SDU segments that are successfully received before. Then, the AM RLC entity receive end places, in a receive buffer, the data unit on which duplicate detection is performed. If the SN of the data unit is greater than or equal to RX_Next_Highest, the AM RLC entity receive end updates the variable RX_Next_Highest to the SN of the PDU plus 1. If the data unit includes a complete RLC SDU, or an SDU segment in the data unit can be reassembled into a complete SDU with another SDU segment in the receive buffer, the AM RLC entity receive end removes an RLC header after completing reassembly, and delivers the SDU to the upper layer; if an SN of the SDU obtained through reassembly is equal to RX_Next, updates RX_Next to an SN of a 1^{st} RLC SDU whose SN is greater than current RX_Next and whose reassembly has not been completed; and if the SN of the SDU obtained through reassembly is equal to RX_Highest_Status, updates RX_Highest_Status to an SN of a 1^{st} RLC SDU whose SN is greater than current RX_Highest_Status and whose reassembly has not been completed.

The AM RLC entity receive end starts the reassembly timer and sets the variable RX_Timer_Trigger to be equal to RX_Next_Highest when the reassembly timer is not running and one of the following conditions is satisfied:
(1) RX_Next_Highest>RX_Next+1; and
(2) RX_Next_Highest=RX_Next+1, and there is a segment that has not been received before a last byte of a currently received data unit with an SN=RX_Next.

The AM RLC entity receive end stops and resets the reassembly timer when the reassembly timer is running and one of the following conditions is satisfied:
(1) RX_Next_Status_Trigger=RX_Next;
(2) RX_Next_Status_Trigger=RX_Next+1, and all segments have been received before the last byte of the currently received data unit with the SN=RX_Next; and
(3) RX_Next_Status_Trigger falls outside the receive window, and RX_Next Status_Trigger is not equal to the RX_Next+AM_Window_Size.

When the reassembly timer expires, the AM RLC entity receive end updates the variable RX_Highest_Status to an SN of a 1^{st} data unit whose SN is greater than or equal to RX_Next_Status_Trigger and whose reassembly has not been completed, and triggers the status report (for requesting the transmit end to retransmit an RLC SDU or SDU segment that is indicated in the status report and that is not successfully received). If RX_Next_Highest>RX_Highest_Status+1, or RX_Next_Highest=RX_Highest_Status+1 and there is a segment that has not been received before a last byte of a currently received RLC SDU with an SN=RX_Highest_Status, the AM RLC entity receive end starts the reassembly timer, and sets the variable RX_Next_Status_Trigger to be equal to a current value of RX_Next_Highest.

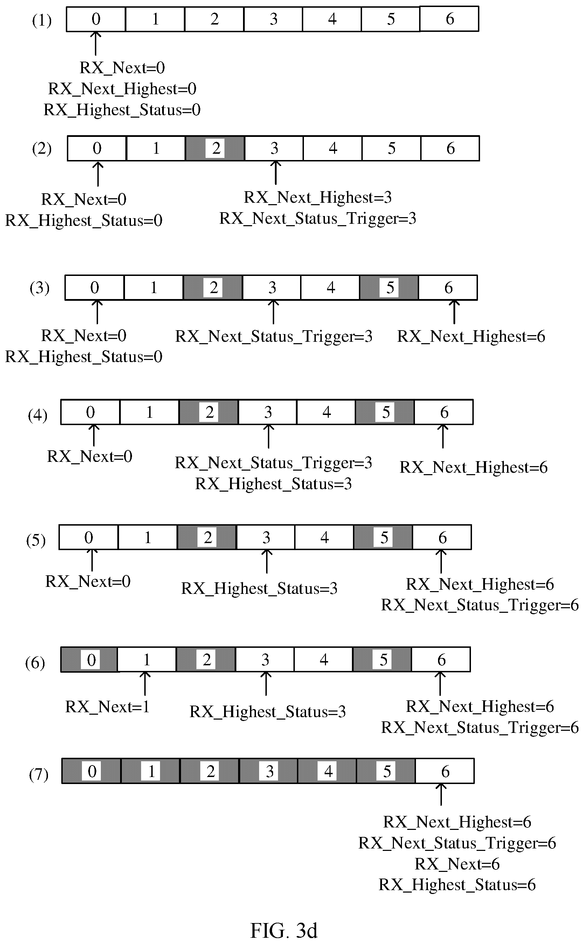

For example, FIG. 3d is a diagram of a process in which the AM RLC entity receive end maintains the variables according to an embodiment of this application. (1) in FIG. 3d may be understood as an initial state. (2) in FIG. 3d may be understood as follows: An RLC PDU with an SN=2 is received, and the variable RX_Next_Highest is updated to 3. In this case, RX_Next<RX_Next_Highest. The reassembly timer is started, and RX_Next_Status_Trigger=3 is set. (3) in FIG. 3d may be understood as follows: An RLC PDU with an SN=5 is received, and the variable RX_Next_Highest is updated to 6. (4) in FIG. 3d may be understood as follows: The reassembly timer expires, the variable RX_Highest_Status is updated to 3, and a status report is triggered. (5) in FIG. 3d may be understood as follows: Because RX_Highest_Status<RX_Next_Highest, the reassembly timer is triggered, and RX_Next_Status_Trigger=6 is set. (6) in FIG. 3d may be understood as follows: A reassembled RLC SDU with an SN=0 is delivered to the upper layer, and RX_Next is updated to 1. (7) in FIG. 3d may be understood as follows: When reassembly of RLC SDUs whose SNs are 0 to 5 is completed, these RLC SDUs are delivered to the upper layer, and RX_Next is updated to 6. In this case, RX_Next=RX_Next_Status_Trigger. The reassembly timer is stopped and reset.

It can be learned from FIG. 3d that a condition for updating RX_Next by the AM RLC entity is that reassembly of all RLC SDUs whose SNs are less than RX_Next has been completed. As shown in (6) in FIG. 3d, the value of RX_Next can be updated only after reassembly of the RLC SDU with the SN=0 is completed. In the AM, the AM RLC entity receive end updates the value of RX_Next only after a data unit whose SN is equal to a lower bound RX_Next of the receive window is successfully reassembled and delivered to the upper layer. If the data unit is not successfully received, the AM RLC entity receive end indicates, by using the status report, the transmit end to retransmit the data unit until the data unit is successfully received or a maximum quantity of retransmissions is reached. Therefore, if the transmit end has discarded the data unit, the AM RLC entity receive end cannot update in time the variable maintained by the AM RLC entity receive end, and continuously requests for retransmission of the discarded data unit, resulting in a waste of air interface resources and device energy, an increase in a transmission delay, and even impact on normal service running due to triggering of a radio link failure when the maximum quantity of retransmissions is reached. The problem that exists at the AM RLC entity receive end when the transmit end discards the data unit also exists at the AM RLC entity receive end when the receive end discards the data unit. Similarly, the problem that exists when the transmit end or the receive end discards the data unit herein also exists when the transmit end or the receive end discards a data unit set.

Based on the related problems in FIG. 3a to FIG. 3d, embodiments of this application provide a data processing method and an apparatus. When at least one of a transmit end or a receive end discards a data unit, a variable maintained by the receive end may be updated in time, so that effective improvement may be made on a stagnated process of the receive end due to data unit discarding, and a delay in processing the data unit by the receive end can be reduced.

Before the method provided in embodiments of this application is described, the following first describes related terms or methods in embodiments of this application.

### First: data unit set

The data unit set may be understood as a service data unit set, a protocol data unit set (protocol data unit set, PDU set), a frame, or the like. In an example, the data unit set may include M data units, where a value of M is not limited in embodiments of this application. In another example, the data unit set may be understood as a set of all data units for transmitting one information element, where the information element may be understood as a video frame, a video slice, or the like. For example, an example in which the video frame is a video frame in an extended reality (extended reality, XR) service is used. XR is an environment that integrates a real world and a virtual world and supports human-computer interaction and that is generated by using a computer technology and a wearable device, and is a collective term for a plurality of forms such as augmented reality (augmented reality, AR), virtual reality (virtual reality, VR), and mixed reality (mixed reality, MR). XR implements "immersive" experience of seamless switching between the virtual world and the real world through fusion of three visual interaction technologies. A video in the XR service is formed by continuous playback of continuous images (or pictures, photos, or the like). One video frame may be understood as one image, and the one video frame may be divided into a plurality of data packets for transmission. Therefore, the data unit set may be understood as one video frame, and the one video frame may include a plurality of data units. Generally, an application server may periodically generate a set (which may also be referred to as a PDU set or the like) based on a specific frame rate. For example, the frame rate being 60 frames per second (frames per second, fps) indicates that 60 images are generated per second, and one data unit set is generated about every 16.66 ms. The application server may include an XR application server and the like. This is not limited in embodiments of this application.

Second: A manner of determining that a data unit belongs to a data unit set (which may also be understood as a manner of determining a data unit included in a data unit set) may include:
Manner 1: For a downlink service, a user plane function (user plane function, UPF) may add a start flag and/or an end flag of each data unit set to a general packet radio system tunneling protocol for the user plane (general packet radio system tunneling protocol for the user plane, GTP-U) header, and a network device determines, based on the start flag and/or the end flag, a data unit that belongs to each data unit set. For example, the UPF may add a start flag or an end flag to the GTP-U header for a first set. In this case, a quantity of data units included in the first set may be fixed. Therefore, the network device may determine, based on the start flag or the end flag, that a first data unit belongs to the first set. For another example, the UPF may add a start flag and an end flag to the GTP-U header for a first set, so that the network device can quickly and effectively determine that a first data unit belongs to the first set. In an example, the start flag may be added to a 1^{st} packet in each set. For example, if the network device receives 10 data packets, and identifies that a 1^{st} packet and a 6^{th} packet each carry a start flag, it is considered that the 1^{st} to the 5^{th} packets belong to one set, and the 6^{th} to the 10^{th} packets belong to another set. In another example, the end flag may be added to a last packet in each set. For example, if the network device receives 10 data packets, and identifies that a 5^{th} packet and a 10^{th} packet each carry an end flag, it is considered that the 1^{st} to the 5^{th} packets belong to one set, and the 6^{th} to the 10^{th} packets belong to another set. In still another example, the start flag may be added to a 1^{st} packet in each set and the end flag may be added to a last packet. For example, if the network device receives 10 data packets, and identifies that a 1^{st} packet and a 6^{th} packet each carry a start flag and a 5^{th} packet and a 10^{th} packet each carry an end flag, it is considered that the 1^{st} to the 5^{th} packets belong to one set, and the 6^{th} to the 10^{th} packets belong to another set. In Manner 1, not only a set to which a data unit belongs can be determined, but also the network device can determine, based on a start flag, a 1^{st} data unit that belongs to a set, or determine a last data unit in a set (equivalent to determining a 1^{st} data unit in a next set of the set) based on an end flag.
Manner 2: For a downlink service, a UPF may add, to a GTP-U header, a set serial number for a data unit included in each data unit set. For example, the UPF may add, to the GTP-U header, a set serial number for each data unit included in each data unit set, so that a network device may determine, based on the set serial number included in each data unit, a data unit set to which a data unit belongs.
Manner 3: A network device (or a terminal device) may maintain a timer, and duration of the timer may be set to maximum duration or average duration in which all data units in a data unit set arrive at the network device (or the terminal device). The maximum duration (or the average duration) described herein is duration from time when a 1^{st} data unit in the data unit set arrives at the network device to time when a last data unit in the data unit set arrives at the network device. If the network device receives a data unit in a non-running period of the timer, the timer is started, and it is considered that the data unit is a 1^{st} data unit in the data unit set. All data units received in a running period of the timer may be considered as belonging to the data unit set. Generally, data units in a data unit set arrive at the network device (or the terminal device) in a form of a burst. In other words, the data units in the data unit set arrive at the network device (or the terminal device) in a concentrated manner. Therefore, the network device (or the terminal device) may determine, based on a degree of concentration of arrival of data units, whether a data unit is a 1^{st} data unit in a data unit set.

Optionally, for the transmit end, the transmit end may associate a set serial number with the first data unit after determining that the first data unit belongs to the first set (for example, in at least one of Manner 1 to Manner 3), that is, set serial numbers of different data units in the first set may be a set serial number of the first set. Optionally, the transmit end may maintain a counter, where an initial value of the counter is 0, and a value of the counter is increased by 1 each time an entity at the transmit end receives a 1^{st} data unit or a last data unit in a set. Data units received when the value of the counter remains unchanged belong to a same set, so that the transmit end may associate the data units obtained when the value of the counter remains unchanged with a same set serial number. It may be understood that the counter may be referred to as a set serial number counter, a counter configured to add a set serial number, or the like. A name of the counter is not limited in embodiments of this application. For the receive end, the receive end may identify, by using a set serial number associated by the transmit end with each data unit, a data unit that belongs to the first set. After obtaining the first data unit, the receive end may conveniently and quickly determine, based on the set serial number associated with the first data unit, that the first data unit belongs to the first set. It may be understood that the set serial number may also be understood as a set identifier, a set flag, or the like.

It may be understood that whether different data unit sets include a same quantity of data units is not limited in embodiments of this application. For ease of distinguishing between different specific manners (for example, Manner 1 to Manner 3) for the step, in embodiments of this application, different serial numbers are used for distinguishing, and this does not indicate that there is a sequence between these serial numbers.

Third: A manner of discarding a data unit set includes:
Manner 4: If an entity at the transmit end detects that a packet loss status of a data unit set satisfies a first condition, the entity at the transmit end may determine to discard the data unit set. The entity at the transmit end may include at least one of a PDCP entity at the transmit end or an RLC entity at the transmit end. The packet loss status of the data unit set includes at least one of the following: a quantity of data units that are discarded by the PDCP entity at the transmit end, a quantity of data units that are not successfully sent by the PDCP entity at the transmit end, a quantity of data units that are discarded by the RLC entity at the transmit end, and a quantity of data units that are not successfully sent by the RLC entity at the transmit end. That the packet loss status of the data unit set satisfies the first condition may include at least one of the following: A quantity of data units in the data unit set that are discarded is greater than or equal to a second threshold, a quantity of data units in the data unit set that are not successfully sent is greater than or equal to the second threshold, a ratio of the quantity of data units in the data unit set that are discarded to a total quantity of data units in the data unit set is greater than or equal to a third threshold, and a ratio of the quantity of data units in the data unit set that are not successfully sent to the total quantity of data units in the data unit set is greater than or equal to the third threshold. A total quantity of data units included in a data unit set may be indicated by an application server to the transmit end. For example, the application server sends, to the transmit end, information indicating the total quantity. For another example, the transmit end may determine the total quantity based on the start flag and the end flag described in Manner 1. For another example, the transmit end may determine, based on a degree of concentration of data units obtained by the transmit end, a total quantity of data units included in a data unit set.
Manner 5: If the receive end detects that a packet loss status of a data unit set satisfies a first condition, the receive end may determine to discard the data unit set. The packet loss status of the data unit set includes at least one of the following: a quantity of data units that are not successfully delivered by a PDCP entity at the receive end to an upper layer, a quantity of data units that fail to be reassembled by an UM RLC entity at the receive end, and a quantity of data units that fail to be reassembled by an AM RLC entity receive end. That the packet loss status of the data unit set satisfies the first condition may include at least one of the following: A quantity of data units in the data unit set that are not successfully delivered to the upper layer is greater than or equal to a second threshold, a quantity of data units in the data unit set that fail to be reassembled is greater than or equal to the second threshold, a ratio of the quantity of data units in the data unit set that are not successfully delivered to the upper layer to a total quantity of data units in the data unit set is greater than or equal to a third threshold, and a ratio of the quantity of data units in the data unit set that fail to be reassembled to the total quantity of data units in the data unit set is greater than or equal to the third threshold.

The second threshold and the third threshold related to the first condition are described as follows: For example, the second threshold and the third threshold may be defined in a protocol. For another example, the second threshold and the third threshold may be indicated by the application server to the transmit end or the receive end by using indication information, where the indication information carries at least one of the second threshold and the third threshold. The second threshold and the third threshold may be set differently based on different services. For example, a second threshold corresponding to a high-reliability low-latency service may be different from that corresponding to another service. Specific values and setting manners of the second threshold and the third threshold are not limited in embodiments of this application. It may be understood that values of the second threshold in Manner 4 and Manner 5 may be the same or different. Similarly, values of the third threshold in Manner 4 and Manner 5 may be the same or different. This is not limited in embodiments of this application.

It should be noted that the foregoing manners of discarding the data unit set are merely examples. A case in which the foregoing problems in embodiments of this application occur when the transmit end and the receive end determine to discard the data unit set in another manner also falls within the protection scope of embodiments of this application.

The following describes in detail the data processing method in embodiments of this application.

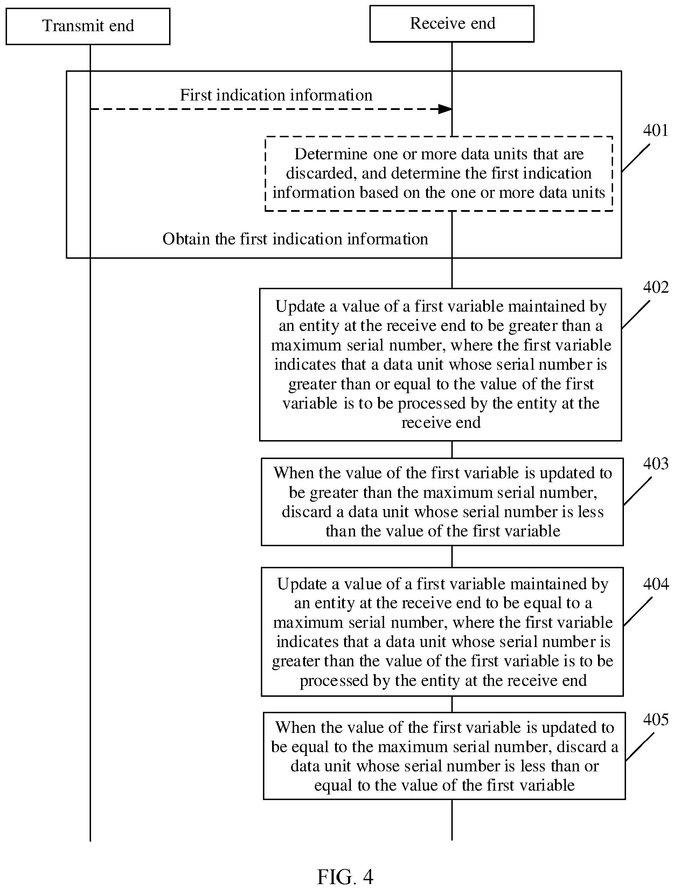

FIG. 4 is a schematic flowchart of a data processing method according to an embodiment of this application. The method may be applied to a communication system including UE and a base station, a V2X system, a Wi-Fi system, and the like. For a system to which the method is applied, refer to the foregoing descriptions. Details are not described herein again. In this embodiment of this application, a transmit end (including an entity at the transmit end) may be understood as a party that sends a data unit, and a receive end (including an entity at the receive end) may be understood as a party that receives the data unit. During data processing of the transmit end and the receive end, the transmit end may discard one or more data units, so that the transmit end may send first indication information to the receive end; or after the receive end receives a data unit from the transmit end, the receive end may discard one or more data units, so that the receive end may determine first indication information. For example, the transmit end may be a network device, and the receive end may be a terminal device. Alternatively, the transmit end may be a terminal device, and the receive end may be a network device. Alternatively, both the transmit end and the receive end may be terminal devices. Details are not described herein again. Certainly, there may be one or more forwarding devices during data transmission between the transmit end and the receive end. This is not limited in this embodiment of this application.

As shown in FIG. 4, the method includes the following steps.

401: The receive end obtains the first indication information, where the first indication information indicates a maximum serial number of one or more data units that are discarded.

In this embodiment of this application, when one data unit is discarded, the maximum serial number indicates a serial number of the data unit. When a plurality of data units are discarded, the maximum serial number indicates a maximum serial number in serial numbers of the plurality of data units. The serial numbers of the plurality of data units may be continuous. For example, the plurality of data units may belong to different data unit sets, and the first indication information indicates a serial number of each of a plurality of discarded data unit sets, or a maximum set serial number of a plurality of data unit sets. For another example, the plurality of data units may belong to a same data unit set, and the first indication information may indicate a serial number of a discarded data unit set. Certainly, the plurality of data units may not be discarded in a unit of set, but are a plurality of data units that are discarded by the transmit end or the receive end and whose serial numbers are continuous. The plurality of data units are some data units in one data unit set whose serial numbers are continuous, or may be some data units in a plurality of data unit sets whose serial numbers are continuous.

In an example, the maximum serial number may be represented by a maximum sequence number (sequence number, SN). Generally, the entity at the transmit end may allocate an SN to a data unit. Therefore, the maximum serial number in the first indication information may be represented by an SN. For example, the first indication information may indicate a maximum SN of the one or more data units that are discarded. In another example, the maximum serial number may be represented by a maximum count (count) value. Generally, when processing a data unit, a PDCP entity at the receive end maintains a variable of the PDCP entity based on a count value of the data unit. Therefore, the maximum serial number in the first indication information may be represented by the count value. For example, the first indication information may indicate a maximum count value of the one or more data units that are discarded. Certainly, representing the serial number by the SN or the count value herein is merely an example, and any representation manner in which the transmit end and the receive end can identify the serial number of the data unit based on the serial number falls within the protection scope of this embodiment of this application. For a relationship between the SN and the count value, refer to the foregoing descriptions. Details are not described herein again.

The first indication information may indicate, in the following manners, the maximum serial number of the one or more data units that are discarded.

Manner 6: The first indication information includes the maximum serial number of the one or more data units that are discarded. The first indication information carries the maximum serial number, so that the receive end can conveniently and quickly obtain the maximum serial number. Certainly, the first indication information may further include a floating value near the maximum serial number. For example, the first indication information includes the maximum serial number plus 1. Alternatively, the first indication information includes the maximum serial number plus 2. Alternatively, the first indication information includes the maximum serial number minus 1. Alternatively, the first indication information includes the maximum serial number minus 2. Details are not described herein again. When content included in the first indication information is the floating value near the maximum serial number, the floating value may be set by the network device, and the network device may further send the floating value to the terminal device. Alternatively, the floating value may be defined in a standard. For example, the floating value is set in the terminal device when the terminal device is set from a factory, or the floating value is set in the network device when the network device is set from a factory.

Manner 7: The first indication information includes an offset value, where the offset value is an offset value between the maximum serial number and a reference serial number. The reference serial number may be defined in a protocol, or may be determined by the network device. A specific value of the reference serial number is not limited in this embodiment of this application. The reference serial number may be fixed, or may not be fixed. The first indication information includes the offset value, so that signaling overheads of the first indication information can be reduced.

Manner 8: The first indication information includes the serial number of the discarded data unit set. In an example, when the plurality of data units belong to one data unit set, the first indication information may include a serial number of the data unit set. In another example, when the plurality of data units belong to different data unit sets, the first indication information may include a serial number of each of a plurality of data unit sets, or the first indication information may include a maximum serial number of a plurality of data unit sets.

Optionally, when the first indication information includes the serial number of the discarded data unit set, the receive end may further perform the following operations: obtaining the serial number of the discarded data unit set, and determining a maximum serial number of the plurality of data units based on the serial number of the discarded data unit set. For example, if the first indication information includes a serial number of a data unit set 1 that is discarded, the receive end may determine, based on a data unit included in the data unit set 1, a maximum serial number of a plurality of data units that are discarded. It may be understood that the operations of the receive end described herein are also applicable to the transmit end. The transmit end and the receive end may determine, in Manner 1 to Manner 3 described above, a data unit included in a data unit set.

The receive end may obtain the first indication information in the following manners.

Manner 9: The receive end receives the first indication information from the transmit end.

The transmit end sends a data unit to the receive end, but the transmit end actively discards one or more data units in a process of sending the data unit. In this case, the transmit end sends the first indication information to the receive end, so that the receive end performs the method shown in FIG. 4.

In an example, the entity at the transmit end may determine to discard one or more data units. For example, a PDCP entity at the transmit end may determine, based on a discard timer maintained by the PDCP entity, to discard one or more data units. For another example, an RLC entity at the transmit end may determine, according to the method shown in FIG. 3c, to discard one or more data units. It may be understood that when a plurality of data units are discarded, serial numbers of the plurality of data units may be continuous.

In another example, the transmit end may determine to discard one or more data unit sets. For example, the transmit end may determine, in Manner 4, to discard one or more data unit sets.

The foregoing method for discarding one or more data units by the transmit end is merely an example, and should not be understood as a limitation on this embodiment of this application.

Manner 10: The receive end determines one or more data units that are discarded, and determines the first indication information based on the one or more data units.

The receive end independently determines the first indication information, so that the entity at the receive end maintains a first variable based on the first indication information. It may be understood that the receive end determines one piece of first indication information based on the data unit that is discarded, or the receive end may not determine the first indication information, but directly updates, based on one or more data units that are discarded by the receive end, the first variable maintained by the receive end.

In an example, the PDCP entity at the receive end may determine, according to FIG. 3a, to discard one or more data units. For another example, an RLC entity at the receive end may determine, according to FIG. 3b or FIG. 3d, to discard one or more data units.

In another example, the receive end may determine, in Manner 5, to discard one or more data unit sets.

In a possible implementation, after the receive end determines to discard one or more data units, the receive end may further perform the following operation.

The entity at the receive end sends second indication information, where the second indication information indicates the entity at the transmit end to discard the one or more data units, or the second indication information indicates the entity at the transmit end to discard a data unit set corresponding to the one or more data units. For example, after the receive end determines to discard one or more data units, the receive end may update, based on the one or more data units that are discarded by the receive end, a variable maintained by the receive end, and send the second indication information to the transmit end. After the receive end determines to discard one or more data units, the receive end may not perform the step of determining the first indication information, but updates, based on the one or more data units that are discarded by the receive end, the first variable maintained by the receive end, and sends the second indication information.

The data unit set corresponding to the one or more data units described herein may be understood as at least one of the following: one or more data unit sets to which the one or more data units belong, or one or more data unit sets to which the one or more data units belong and a data unit set that depends on the one or more data unit sets. For example, a data unit set A depending on a data unit set B indicates that information included in the data unit set B needs to be used in a processing process of the data unit set A. Therefore, when discarding the data unit set B, the receive end may discard the data unit set A. Certainly, based on the descriptions of the second indication information, the first indication information described in this embodiment of this application may also indicate to discard a data unit set corresponding to one or more data units.

The entity at the receive end may include the PDCP entity at the receive end, and the entity at the transmit end may include the PDCP entity at the transmit end. Alternatively, the entity at the receive end may include the RLC entity at the receive end, and the entity at the transmit end may include the RLC entity at the transmit end.

In this embodiment of this application, the receive end sends the second indication information to the transmit end, so that the entity at the transmit end can clear a buffer based on the second indication information.

402: Update a value of the first variable maintained by the entity at the receive end to be greater than the maximum serial number, where the first variable indicates that a data unit whose serial number is greater than or equal to the value of the first variable is to be processed by the entity at the receive end.

Updating the value of the first variable maintained by the entity at the receive end to be greater than the maximum serial number may be understood as updating the value of the first variable maintained by the entity at the receive end to the maximum serial number plus 1, the maximum serial number plus 2, the maximum serial number plus 3, or the like. Details are not described herein again. That the first variable indicates that a data unit whose serial number is greater than or equal to the value of the first variable is to be processed by the entity at the receive end may be understood as follows: The first variable indicates that a data unit whose serial number is less than the value of the first variable does not need to be processed by the entity at the receive end. In an example, if the maximum serial number is 5, the value of the first variable may be updated to 6. Therefore, the entity at the receive end may not need to process a data unit whose serial number is less than 6, and only needs to pay attention to a data unit whose serial number is greater than or equal to 6. For example, the entity at the receive end may reassemble a data unit whose serial number is 6, or sequentially deliver the data unit whose serial number is greater than or equal to 6 to an upper layer.

In a possible implementation, the updating a value of the first variable maintained by the entity at the receive end to be greater than the maximum serial number includes: updating the value of the first variable maintained by the entity at the receive end to a serial number that is greater than the maximum serial number and that is of a 1^{st} data unit whose reassembly is not completed. The first variable indicates that the data unit whose serial number is greater than or equal to the value of the first variable is to be reassembled by the entity at the receive end (which may also be understood as that the data unit whose serial number is less than the value of the first variable does not need to be reassembled by the entity at the receive end). The serial number of the 1^{st} data unit whose reassembly is not completed may be understood as a serial number of an earliest data unit whose reassembly is not completed, or a minimum serial number of a data unit whose reassembly is not completed.

In another possible implementation, the updating a value of the first variable maintained by the entity at the receive end to be greater than the maximum serial number includes: updating the value of the first variable maintained by the entity at the receive end to a serial number that is greater than the maximum serial number and that is of a 1^{st} discontinuous data unit not delivered to the upper layer. The first variable indicates that the data unit whose serial number is greater than or equal to the value of the first variable is to be delivered by the entity at the receive end to the upper layer. The serial number of the 1^{st} discontinuous data unit not delivered to the upper layer may be understood as a minimum serial number or an earliest serial number of a discontinuous data unit not delivered to the upper layer.

In a possible implementation, the method shown in FIG. 4 further includes the following step.

403: When the value of the first variable is updated to be greater than the maximum serial number, discard the data unit whose serial number is less than the value of the first variable.

The data unit whose serial number is less than the value of the first variable does not need to be processed by the entity at the receive end, so that the entity at the receive end may discard the data unit whose serial number is less than the value of the first variable. Certainly, when discarding the data unit less than the value of the first variable, the entity at the receive end may discard the data unit based on a status of data units that have been delivered by the entity at the receive end to the upper layer and the maximum serial number indicated by the transmit end. When the one or more data units belong to one or more data unit sets, the entity at the receive end may discard the one or more data unit sets.

As described herein, discarding the data unit based on the status of data units that have been delivered by the receive end to the upper layer and the maximum serial number indicated by the transmit end may be understood as follows: The receive end may discard the data unit based on a data unit buffered in a receive buffer of the receive end and the maximum serial number indicated by the transmit end. For example, the receive end may discard the data unit in the receive buffer whose serial number is less than the value of the first variable.

It may be understood that a sequence of step 402 and step 403 is not limited in this embodiment of this application. As described in step 403, discarding the data unit whose serial number is less than the value of the first variable when the value of the first variable is updated to be greater than the maximum serial number does not mean that the value of the first variable needs to be updated to be greater than the maximum serial number before the data unit whose serial number is less than the value of the first variable is discarded, but indicates that step 402 and step 403 may be coupled to each other. Similarly, step 404 and step 405 described below may be coupled to each other.

404: Update a value of the first variable maintained by the entity at the receive end to be equal to the maximum serial number, where the first variable indicates that a data unit whose serial number is greater than the value of the first variable is to be processed by the entity at the receive end.

That the first variable indicates that a data unit whose serial number is greater than the value of the first variable is to be processed by the entity at the receive end may be understood as follows: A data unit whose serial number is less than or equal to the value of the first variable does not need to be processed by the entity at the receive end. Alternatively, the data unit whose serial number is greater than the value of the first variable is to be reassembled by the entity at the receive end. Alternatively, the data unit whose serial number is greater than the value of the first variable is to be delivered by the entity at the receive end to an upper layer. Whether the data unit whose serial number is greater than the value of the first variable includes a data unit whose reassembly has been completed or a data unit that has been delivered to the upper layer is not limited in this embodiment of this application.

In a possible implementation, the method shown in FIG. 4 further includes the following step.

405: When the value of the first variable is updated to be equal to the maximum serial number, discard the data unit whose serial number is less than or equal to the value of the first variable.

For specific descriptions of step 405, refer to step 403. Details are not described herein. In Example 1 to Example 3 described below, step 402 and step 403 are used as examples, and should not be understood as limitations on this embodiment of this application.

It may be understood that a sequence of step 404 and step 405 is not limited in this embodiment of this application.

It should be noted that step 402 and step 404 may be understood as parallel solutions. In other words, the method shown in FIG. 4 may include step 401, step 402, and step 403, or include step 401, step 404, and step 405.

Regardless of whether the transmit end discards one or more data units or the receive end discards one or more data units, the entity at the receive end needs to maintain the first variable based on a serial number of a data unit received by the entity at the receive end. If the data unit is discarded, but the entity at the receive end fails to obtain in time the maximum serial number of the data unit that has been discarded, and cannot update, based on the discarded data unit, the first variable maintained by the entity at the receive end, a process in which the entity at the receive end delivers a data unit to an upper layer is limited, and a processing delay is increased.

According to the solution provided in this embodiment of this application, the receive end updates, based on the maximum serial number indicated in the first indication information, the value of the first variable maintained by the receive end to be greater than the maximum serial number. This makes effective improvement on a slow process, due to impact of the discarded data unit, of the entity at the receive end in processing a data unit, and effectively improves a processing progress of the receive end.

The following describes the method shown in FIG. 4 with reference to a specific protocol layer. However, the protocol layer described below should not be understood as a limitation on this embodiment of this application.

In some embodiments of this application, the PDCP entity at the transmit end may trigger active discarding of one or more data units, and indicate the RLC entity to discard the one or more data units. Alternatively, the PDCP entity at the transmit end may trigger active discarding of the data unit set, and indicate the RLC entity to discard all data units that belong to the discarded data unit set. The RLC entity at the transmit end triggers active discarding of the data unit. Alternatively, the RLC entity at the transmit end triggers active discarding of the data unit set, to discard all data units that belong to the discarded data unit set.

It can be learned from the PDCP entity described above that the RLC entity is indicated to discard the data unit if the discard timer of the PDCP entity expires, and a condition for discarding the data unit by the RLC entity is that the data unit and a segment of the data unit have not been delivered to a MAC layer. Particularly for an AM RLC entity transmit end, once a data unit is delivered to the MAC layer, the AM RLC entity transmit end places the data unit in a retransmission buffer, and before receiving an acknowledgment message fed back by an AM RLC entity receive end, the AM RLC entity transmit end continuously retransmits the data unit. A prerequisite for indicating, by the PDCP entity, the RLC entity to discard the data unit is that the data unit is useless. In this case, if the RLC entity still sends the data unit, not only a waste of air interface resources is caused, but also a data unit processing process of the RLC entity at the receive end is affected. Particularly for an XR service, when a transmission delay of a data unit exceeds a packet delay budget (packet delay budget, PDB), it is considered that the data unit fails to be transmitted or is lost, so that the transmit end does not need to attempt to transmit or retransmit the data unit again.

The foregoing descriptions are not only applicable to a single data unit, but also applicable to a data unit set. For example, in some cases, a packet loss status of the data unit set satisfying a first condition indicates that the data unit set is unavailable, and the transmit end does not need to attempt to transmit another data unit in the data unit set that is not transmitted. Therefore, this embodiment of this application provides the following Example 1 and Example 2.

### Example 1

To resolve the foregoing problem, when the RLC entity is indicated to discard a data unit if the discard timer of the PDCP entity at the transmit end, or when the RLC entity at the transmit end triggers active discarding of a data unit, the RLC entity at the transmit end may perform at least one of the following operations.
(1) Discard the data unit, regardless of whether a segment of the data unit has been delivered to the MAC layer. Similarly, when the PDCP entity at the transmit end determines to discard a data unit set, the PDCP entity may indicate the RLC entity to discard the data unit set, regardless of whether a data unit in the data unit set has been delivered to the MAC layer, or regardless of whether a segment of a data unit in the data unit set has been delivered to the MAC layer.
   It may be understood that in an AM service mode, the RLC entity at the transmit end may further discard at least one of a data unit (such as an RLC SDU and an RLC PDU) or a segment of the data unit in a retransmission buffer, or discard at least one of a data unit set, a data unit included in the data unit set, or a segment of the data unit in a retransmission buffer.
(2) Send first indication information to the RLC entity at the receive end, to indicate a maximum SN of the data unit discarded this time.

Optionally, the RLC entity at the transmit end may maintain a variable, for example, discardSN. A value of the variable is set to be equal to the maximum SN of the data unit discarded this time, and the first indication information may include the value of the variable. Alternatively, a value of the variable is equal to the maximum SN of the data unit discarded this time plus 1, and the first indication information may include the value of the variable minus 1.

In an example, the RLC entity at the transmit end may send the first indication information to the RLC entity at the receive end when completing discarding the data unit or the data unit set. In another example, in the AM service mode, the RLC entity at the transmit end may send the first indication information to the RLC entity at the receive end when receiving an RLC status report. An occasion at which the RLC entity at the transmit end sends the first indication information is not limited in this embodiment of this application.

For example, the first indication information may be included in an RLC control protocol data unit (control PDU) or an RLC data protocol data unit (data PDU). For example, the RLC entity at the transmit end may include a maximum serial number in each RLC header of N data PDUs that are subsequently sent (relative to a discarded data unit with the maximum serial number), where a value of N may be configured by the network device for the terminal device by using radio resource control (radio resource control, RRC) signaling, a MAC control element (control element, CE), or layer 1 signaling (for example, downlink control information (downlink control information, DCI)). For another example, the RLC entity at the transmit end may include, in each RLC header of N data PDUs that are subsequently sent, an offset between an SN of a currently transmitted data PDU and a maximum serial number. For example, if the maximum serial number is 103, an offset value 1 is carried in a data PDU whose SN is 104, an offset value 2 is carried in a data PDU whose SN is 105, and so on. It may be understood that whether the data PDU whose SN is 104 and the data PDU whose SN is 105 are to be discarded is not limited in this embodiment of this application. That the maximum serial number is 103 may be understood as a maximum serial number of the data unit discarded this time.

After receiving the first indication information, a receiving UM RLC entity may perform at least one of the following operations.
(1) Update a variable RX_Next_Reassembly (that is, the first variable) to an SN of a 1^{st} data unit whose SN is greater than the maximum serial number indicated in the first indication information and whose reassembly has not been completed (which may also be understood as an SN of an earliest data unit whose reassembly has not been completed, or a minimum SN for which reassembly has not been completed).
(2) Discard an SDU segment in a receive buffer whose SN is less than updated RX_Next_Reassembly.
(3) Correspondingly modify another receive side variable and a timer status. For example, when the updated RX_Next_Reassembly is greater than or equal to RX_Timer_Trigger, a reassembly timer t-Reassembly is stopped.

After receiving the first indication information, the AM RLC entity receive end may perform at least one of the following operations.
(1) Update a variable RX_Next (that is, the first variable) to an SN of a 1^{st} data unit whose SN is greater than the maximum serial number indicated in the first indication information and whose reassembly has not been completed (which may also be understood as an SN of an earliest data unit whose reassembly has not been completed, or a minimum SN for which reassembly has not been completed).
(2) Discard an SDU segment in a receive buffer whose SN is less than updated RX_Next.
(3) Correspondingly modify another receive side variable and a timer status. For example, when an updated value of RX_Next is greater than RX_Next_Status_Trigger, a reassembly timer t-Reassembly is stopped.

It may be understood that for descriptions of updating, by the receiving UM RLC entity, another variable other than the first variable and the timer status, refer to the foregoing descriptions. Details are not described herein again.

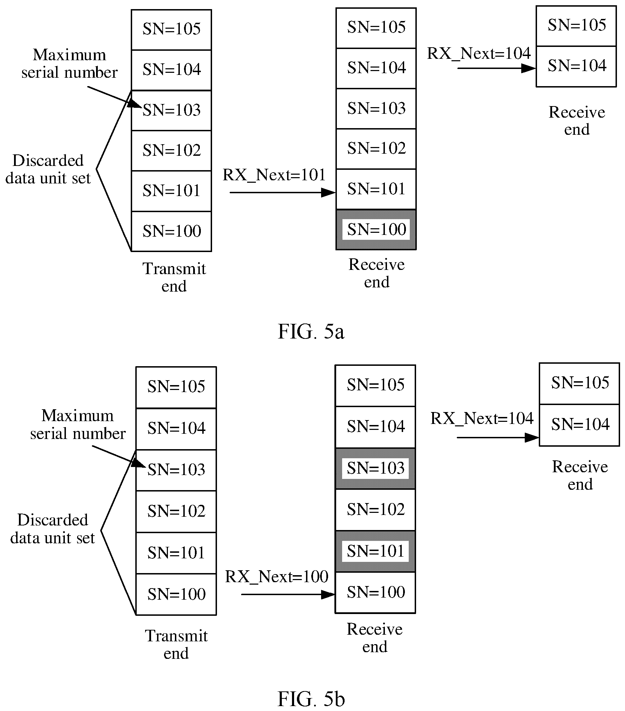

FIG. 5a and FIG. 5b are diagrams of a data processing scenario according to an embodiment of this application. As shown in FIG. 5a and FIG. 5b, the AM RLC entity transmit end discards a data unit set, where the data unit set includes data units with an SN=100 to an SN=103, and a maximum serial number is 103. A difference between FIG. 5a and FIG. 5b is as follows: In FIG. 5a, at least one of the following cases occurs in a process in which the transmit end sends a subsequent data unit after sending the data unit with the SN=100: A discard timer corresponding to the SN=101 expires, and a discard timer corresponding to the SN= 102 expires. Because a packet loss status of the data unit set satisfies the first condition, the transmit end determines to discard the data unit set. However, in FIG. 5b, the transmit end may have sent the data units with the SN=100 to the SN=103, and the receive end successfully receives the data units with the SN=101 and the SN=103, but does not receive the data units with the SN=100 and the SN=102. Therefore, the receive end indicates, in a status report, the transmit end to retransmit the data units with the SN=100 and the SN=102. When the transmit end retransmits the data units with the SN=100 and the SN=102, a discard timer corresponding to the SN=100 expires, and the discard timer corresponding to the SN=102 expires. Therefore, the transmit end determines to discard the data unit set.

For FIG. 5b, it is assumed that the AM RLC entity receive end does not obtain the maximum serial number indicated in the first indication information. In this case, because the AM RLC entity receive end does not receive the data unit with the SN=100, RX_Next cannot be updated, and the AM RLC entity receive end further repeatedly triggers the status report, to indicate the AM RLC entity transmit end to retransmit the data unit with the SN=100. However, because the transmit end has discarded the data unit with the SN=100, the receive end cannot receive the data unit with the SN=100, resulting in suspension of a processing process of the AM RLC entity receive end.

However, in this embodiment of this application, the AM RLC entity transmit end indicates the maximum serial number (SN=103) to the AM RLC entity receive end. When receiving the maximum serial number, the AM RLC entity receive end updates the variable RX_Next maintained by the AM RLC entity receive end to a minimum SN that is greater than 103 and for which reassembly has not been completed, for example, 104.

In this embodiment of this application, when the PDCP entity at the transmit end indicates the RLC entity at the transmit end to discard a data unit set, the RLC entity may discard the data unit set regardless of whether the RLC entity has delivered an SDU segment to the MAC layer. Therefore, transmission of the data unit set over an air interface is effectively avoided, and repeated triggering of the status report by the RLC entity at the receive end (for example, an AM RLC entity) for requesting for retransmission can be effectively avoided, effectively saving air interface resources and transmission energy, and reducing energy consumption of a communication apparatus. The PDCP entity at the transmit end indicates the RLC entity at the transmit end to discard a data unit set, and the RLC entity at the transmit end sends the first indication information to the RLC entity at the receive end, so that the RLC entity at the receive end can update in time a variable maintained by the RLC entity at the receive end. This effectively avoids a case in which a processing process is suspended because the RLC entity at the receive end cannot receive the data unit set discarded by the RLC entity at the transmit end. In addition, for the AM RLC entity, repeated triggering of the status report by the AM RLC entity receive end can be effectively avoided. Therefore, the AM RLC entity receive end updates the variable maintained by the AM RLC entity receive end, to ensure that a process of the AM RLC entity receive end is not affected by the discarded data unit set and avoid an energy consumption loss caused by repeatedly triggering the status report.

### Example 2

When a transmitting PDCP entity determines to discard a data unit set, the transmitting PDCP entity may perform at least one of the following operations.
(1) Discard the data unit set, and clear a buffer for the data unit set.
(2) Send first indication information to a receiving PDCP entity, to indicate a maximum serial number of a data unit in the data unit set.

Optionally, the transmitting PDCP entity may maintain a variable, for example, discardSN. A value of the variable is equal to a maximum SN or a maximum count value of a discarded PDCP SDU, and the first indication information may include the value of the variable. Alternatively, a value of the variable is equal to a maximum SN or a maximum count value of a data unit discarded this time plus 1, and the first indication information may include the value of the variable minus 1.

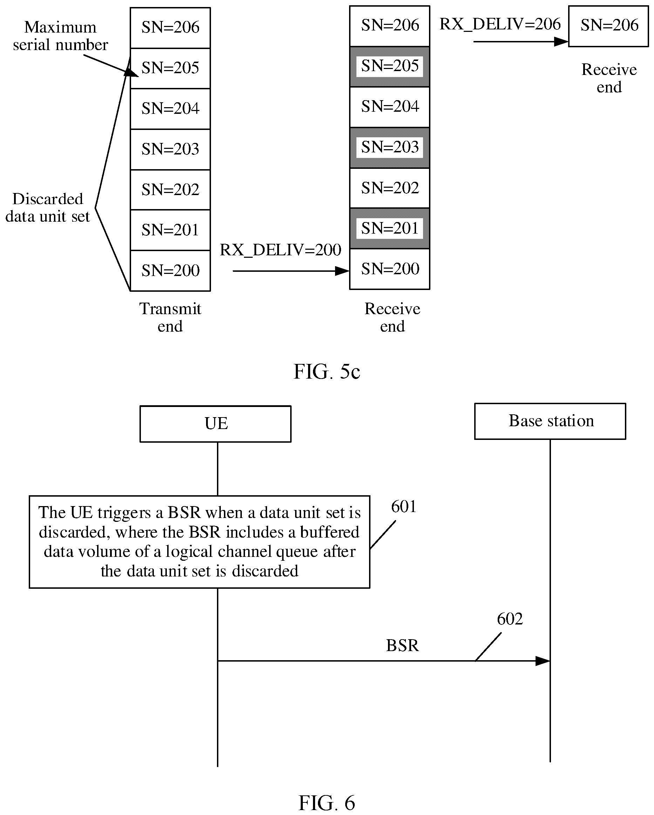

For example, the first indication information may be included in a PDCP control PDU, or included in a PDCP data PDU. FIG. 5c is used as an example. If the maximum serial number of the data unit discarded by the transmitting PDCP entity is 205, the transmitting PDCP entity may add the maximum serial number or the maximum count value to the control PDU. It may be understood that for a conversion relationship between a count value and an SN, refer to a related standard or protocol. Details are not described in this embodiment of this application.

For another example, the transmitting PDCP entity may add the first indication information to each PDCP header of N PDCP data PDUs that are subsequently sent. The first indication information may be a maximum SN or a maximum count value of a PDCP SDU discarded this time. Alternatively, the first indication information may be an offset between a maximum SN/maximum count value for discarding and an SN/count value of a currently sent PDCP data PDU. For example, an offset value 1 is carried in a PDCP data PDU whose SN is 206, an offset value 2 is carried in a PDCP data PDU whose SN is 207, and so on.

After receiving the first indication information, the receiving PDCP entity may perform the following steps.
(1) Determine the maximum count value of the discarded PDCP SDU based on the first indication information. Specifically, if the indication information is an SN, the receiving PDCP entity derives a corresponding maximum count value, where a derivation method may be the same as a method used by the transmitting PDCP entity to derive a count value based on an SN in a PDCP header; or if the indication information in the data PDU is an offset value, the maximum count value is obtained by subtracting the offset value from the SN/count value of the current PDCP data PDU.
(2) The receiving PDCP entity discards all PDCP SDUs in a receive buffer whose count values are less than or equal to the maximum count value, and sequentially delivers SDUs to the upper layer from a PDCP SDU whose count value is equal to the maximum count value plus 1 until a discontinuous count value occurs, and a variable RX_DELIV (that is, the first variable) is set to be equal to a count value of a 1^{st} SDU that has not been delivered to the upper layer. For example, if the maximum count value is 5, and count values of SDUs in the receive buffer are 3, 4, 5, 6, 7, 8, and 10, the receiving PDCP entity discards the SDUs whose count values are 3, 4, 5, and delivers the SDUs whose count values are 6, 7, and 8 to the upper layer, and sets the variable RX_DELIV to be equal to 9.

Optionally, the transmitting PDCP entity may maintain a variable, for example, discardSN. A value of the variable may be equal to the maximum SN or the maximum count value of the PDCP SDU discarded this time, and the first indication information may include the value of the variable. Alternatively, a value of the variable may be equal to the maximum SN or the maximum count value of the data unit discarded this time plus 1, and the first indication information may include the value of the variable minus 1. Optionally, the receiving PDCP entity may maintain the variable discardSN, and the value of the variable may be correspondingly modified based on the first indication information.

In this embodiment of this application, the first indication information is sent to the receiving PDCP entity, so that an increase in a processing delay and impact on delivery of a subsequent PDU set due to triggering of reordering by the receiving PDCP entity caused by discontinuous count values of PDCP SDUs in a receive window can be effectively avoided.

It may be understood that the foregoing Example 2 may be combined with Example 1. In other words, when the transmitting PDCP entity determines to discard a data unit set, the transmitting PDCP entity may indicate the receiving PDCP entity to update a variable maintained by the receiving PDCP entity; or the transmitting PDCP entity may indicate the RLC entity at the transmit end to discard the data unit set, and the RLC entity at the transmit end may indicate the RLC entity at the receive end to update a variable maintained by the RLC entity at the receive end.

Example 1 and Example 2 are both described by using an example in which the transmitting PDCP entity determines to discard a data unit set. Example 3 is described by using an example in which the receiving PDCP entity determines to discard a data unit.

### Example 3

When determining to discard a data unit set, a receiving PDCP entity may perform the following operations.
(1) Discard all PDCP SDUs in a receive buffer that belong to the data unit set.
(2) The receiving PDCP entity updates a lower bound of a receive window, for example, updates a variable RX_DELIV (that is, the first variable) to be greater than the maximum serial number. The maximum serial number is a maximum serial number of a data unit in the data unit set. For example, the variable RX_DELIV may be updated to a count value of a 1^{st} PDCP SDU that belongs to a next data unit set.
(3) Send second indication information to a transmitting PDCP entity.

For example, the second indication information may be included in a PDCP control PDU. The PDCP control PDU may be a PDCP status report, or may be a new PDCP control PDU. For example, the second indication information may indicate a set serial number of the data unit set discarded by the receiving PDCP entity. Alternatively, the second indication information may indicate the maximum serial number of the data unit in the data unit set discarded by the receiving PDCP entity. For descriptions of the second indication information, refer to FIG. 4. Details are not described herein again.

In this embodiment of this application, when determining to discard a data unit set, the receiving PDCP entity updates a variable maintained by the receiving PDCP entity, so that a case in which reordering is repeatedly triggered because count values of SDUs in the receive window of the receiving PDCP entity are discontinuous can be effectively avoided, and a processing delay of the receiving PDCP entity is effectively reduced. In addition, the receiving PDCP entity discards the data unit set, so that delivery of a useless data unit set to an upper layer is effectively avoided, simplifying processing and reducing device energy consumption.

It may be understood that a specific representation form of each variable described in this embodiment of this application is merely an example, and should not be understood as a limitation on this embodiment of this application.

In some other embodiments of this application, for an uplink service, when a PDCP entity or an RLC entity on a UE side actively discards a useless PDU set, a data volume that needs to be transmitted may be greatly reduced. If a base station still allocates an uplink transmission resource to UE based on a BSR reported before active frame discarding, a resource waste may be caused.

In view of this, embodiments of this application further provide a data processing method and an apparatus, to effectively save transmission resources.

FIG. 6 is a schematic flowchart of a data processing method according to an embodiment of this application. As shown in FIG. 6, the method includes the following steps.

601: The UE triggers a BSR when a data unit set is discarded, where the BSR includes a buffered data volume of a logical channel queue after the data unit set is discarded.

In this embodiment of this application, the UE triggers the BSR when at least one of the following conditions is satisfied:
a PDCP entity of the UE discards the data unit set; an RLC entity of the UE discards the data unit set; the PDCP entity of the UE discards the data unit set, and a change value of a buffered data volume of a logical channel or a logical channel group corresponding to the PDCP entity is greater than or equal to a first threshold; and the RLC entity of the UE discards the data unit set, and a change value of a buffered data volume of a logical channel or a logical channel group corresponding to the RLC entity is greater than or equal to the first threshold.

The first threshold may be configured by the base station for the UE by using at least one of RRC signaling, MAC CE signaling, or layer 1 signaling.

For example, a data volume at the transmitting PDCP entity may include at least one of the following data volumes: a PDCP SDU for which a PDCP data PDU has not been constructed, a PDCP data PDU that has not been delivered to a lower layer, a PDCP control PDU, a to-be-retransmitted PDCP SDU (for a PDCP entity corresponding to an AM DRB), and a to-be-retransmitted PDCP data PDU (for the PDCP entity corresponding to the AM DRB). The AM DRB may be understood as a DRB corresponding to an AM RLC entity, or a PDCP entity corresponding to an AM RLC entity.

For example, a data volume at the RLC entity includes at least one of the following data volumes: an RLC SDU or an RLC SDU segment that is not included in an RLC data PDU; a to-be-initially-transmitted RLC data PDU; a to-be-retransmitted RLC data PDU (for AM RLC); and a size of a status report that is to be sent next time, which is estimated by the UE when the status report is triggered and a time t-StatusProhibit is not running or expires, and is used as a part of the data volume at the RLC entity.

It may be understood that the RLC SDU or the RLC SDU segment that is not included in the RLC data PDU may be understood as a data unit that is obtained by the RLC entity and that has not been processed.

It may be understood that the foregoing manner of measuring the data volumes at the transmitting PDCP entity and the RLC entity is merely an example, and should not be understood as a limitation on this embodiment of this application.

Optionally, the BSR may be transmitted by using a BSR MAC CE format, for example, a short BSR MAC CE, in the protocol 38.321, or may be transmitted by using a new MAC CE format.

The BSR may include a latest buffered data volume of the logical channel or the logical channel group corresponding to the PDCP entity or the RLC entity that performs active frame discarding.

602: The UE sends the BSR to the base station. Correspondingly, the base station receives the BSR.

For example, the BSR may be used to request a resource for transmitting the data volume. Alternatively, the BSR may be used to provide information about an uplink data volume to the base station.

It may be understood that triggering the BSR described above may be understood as that the UE sends, after triggering the BSR, the BSR to the base station when a specific condition is satisfied. That the condition for sending the BSR is satisfied may include: An uplink shared channel transmission resource for new transmission is available, and a size of the uplink shared channel transmission resource is sufficient to accommodate a BSR MAC CE and a subheader of the BSR MAC CE when packet assembly is performed based on a logical channel priority. The condition for sending the BSR by the UE is not limited in this embodiment of this application.

In this embodiment of this application, when the data unit set is discarded, the UE reports the latest buffered data volume to the base station by triggering the BSR, so that a resource waste caused by mismatch between a quantity of uplink transmission resources allocated by the base station and an uplink data volume that needs to be transmitted after the UE performs active frame discarding can be avoided. Therefore, it is ensured that the base station can allocate an appropriate quantity of uplink transmission resources based on a latest buffer status, and resources can be properly arranged, avoiding a resource waste.

The following describes in detail the communication apparatus in embodiments of this application.

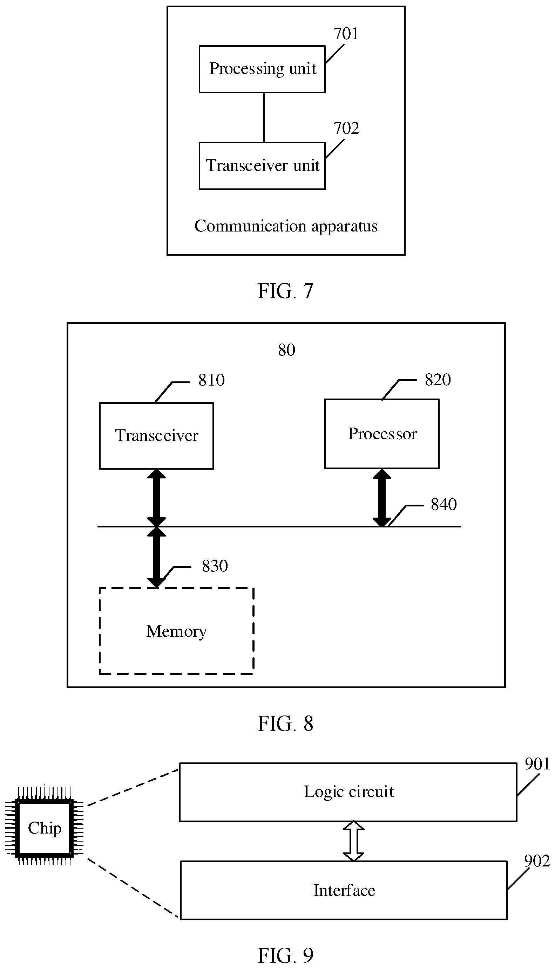

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that module division in this application is an example, and is merely a logical function division. In actual implementation, another division manner may be used. The following describes in detail the communication apparatus in embodiments of this application with reference to FIG. 7 to FIG. 9.

FIG. 7 is a diagram of a structure of a communication apparatus according to an embodiment of this application. As shown in FIG. 7, the communication apparatus includes a processing unit 701 and a transceiver unit 702.

In some embodiments of this application, the communication apparatus may be the receive end described above or a chip, and the chip may be disposed in the receive end. In other words, the communication apparatus may be configured to perform the steps, the functions, or the like performed by the receive end in the foregoing method embodiment.

The processing unit 701 is configured to obtain first indication information. The processing unit 701 is further configured to update a value of a first variable maintained by an entity of the communication apparatus to be greater than a maximum serial number. Alternatively, the processing unit 701 is further configured to update a value of a first variable maintained by an entity of the communication apparatus to be equal to a maximum serial number.

For example, the processing unit 701 may receive the first indication information from a transmit end via the transceiver unit 702. Alternatively, the processing unit 701 may determine the first indication information.

In a possible implementation, the processing unit 701 is further configured to: when the value of the first variable is updated to be greater than the maximum serial number, discard a data unit whose serial number is less than the value of the first variable; or when the value of the first variable is updated to be equal to the maximum serial number, discard a data unit whose serial number is less than or equal to the value of the first variable.

In a possible implementation, the processing unit 701 is specifically configured to: update the value of the first variable maintained by the entity of the communication apparatus to a serial number that is greater than the maximum serial number and that is of a 1^{st} data unit whose reassembly is not completed; or update the value of the first variable maintained by the entity of the communication apparatus to a serial number that is greater than the maximum serial number and that is of a 1^{st} discontinuous data unit not delivered to an upper layer.

In a possible implementation, the processing unit 701 is specifically configured to input the first indication information via the transceiver unit 702.

In a possible implementation, the processing unit 701 is specifically configured to: determine to discard one or more data units, and determine the first indication information.

In a possible implementation, the processing unit 701 is further configured to: obtain a serial number of a discarded data unit set; and determine a maximum serial number of a plurality of data units based on the serial number of the discarded data unit set.

In a possible implementation, the transceiver unit 702 is further configured to output second indication information.

It may be understood that the specific descriptions of the transceiver unit and the processing unit described in this embodiment of this application are merely examples. For specific functions, steps, or the like performed by the transceiver unit and the processing unit, refer to the foregoing method embodiments. Details are not described herein again.

In this embodiment of this application, for descriptions of the first indication information, the maximum serial number, the one or more data units that are discarded, the second indication information, and the like, refer to the descriptions in the foregoing method embodiments. Details are not described herein again.

FIG. 7 is reused. In some other embodiments of this application, the communication apparatus may be the terminal device described above or a chip, and the chip may be disposed in the terminal device. In other words, the communication apparatus may be configured to perform the steps, the functions, or the like performed by the terminal device or the UE in the foregoing method embodiment.

For example, the processing unit 701 is configured to trigger a BSR when a data unit set is discarded. The transceiver unit 702 is configured to output the BSR.

It may be understood that the specific descriptions of the transceiver unit and the processing unit described in this embodiment of this application are merely examples. For specific functions, steps, or the like performed by the transceiver unit and the processing unit, refer to the foregoing method embodiments. Details are not described herein again.

In this embodiment of this application, for descriptions of the BSR, a buffer status report, and the like, refer to the descriptions in the foregoing method embodiments. Details are not described herein again.

The foregoing describes the communication apparatus in this embodiment of this application. The following describes possible product forms of the communication apparatus. It should be understood that a product in any form that has a function of the communication apparatus in FIG. 7 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 7, the processing unit 701 may be one or more processors. The transceiver unit 702 may be a transceiver. Alternatively, the transceiver unit 702 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is input into the processor.

As shown in FIG. 8, a communication apparatus 80 includes one or more processors 820 and a transceiver 810.

For example, when the communication apparatus is configured to perform the steps, the methods, or the functions performed by the receive end,
the processor 820 is configured to obtain first indication information; and the processor 820 is further configured to update a value of a first variable maintained by an entity of the communication apparatus to be greater than a maximum serial number; or the processor 820 is further configured to update a value of a first variable maintained by an entity of the communication apparatus to be equal to a maximum serial number.

In a possible implementation, the processor 820 is further configured to: when the value of the first variable is updated to be greater than the maximum serial number, discard a data unit whose serial number is less than the value of the first variable; or when the value of the first variable is updated to be equal to the maximum serial number, discard a data unit whose serial number is less than or equal to the value of the first variable.

In a possible implementation, the processor 820 is specifically configured to: update the value of the first variable maintained by the entity of the communication apparatus to a serial number that is greater than the maximum serial number and that is of a 1^{st} data unit whose reassembly is not completed; or update the value of the first variable maintained by the entity of the communication apparatus to a serial number that is greater than the maximum serial number and that is of a 1^{st} discontinuous data unit not delivered to an upper layer.

In a possible implementation, the transceiver 810 is configured to receive the first indication information.

In a possible implementation, the processor 820 is specifically configured to: determine to discard one or more data units, and determine the first indication information.

In a possible implementation, the processor 820 is further configured to: obtain a serial number of a discarded data unit set; and determine a maximum serial number of a plurality of data units based on the serial number of the discarded data unit set.

In a possible implementation, the transceiver 810 is further configured to send second indication information.

In this embodiment of this application, for descriptions of the first indication information, the maximum serial number, the one or more data units that are discarded, the second indication information, and the like, refer to the descriptions in the foregoing method embodiments. Details are not described herein again.

For example, when the communication apparatus is configured to perform the steps, the methods, or the functions performed by the terminal device, the processor 820 is configured to trigger a BSR when a data unit set is discarded; and the transceiver 810 is configured to send the BSR.

In this embodiment of this application, for descriptions of the BSR, a buffer status report, and the like, refer to the descriptions in the foregoing method embodiments. Details are not described herein again.

It may be understood that for specific descriptions of the processor and the transceiver, refer to the descriptions of the processing unit and the transceiver unit shown in FIG. 7. Details are not described herein again.

In each implementation of the communication apparatus shown in FIG. 8, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 80 may further include one or more memories 830, configured to store program instructions, data, and/or the like. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be included in the processor.

In this embodiment of this application, a specific connection medium between the transceiver 810, the processor 820, and the memory 830 is not limited. In this embodiment of this application, the memory 830, the processor 820, and the transceiver 810 are connected through a bus 840 in FIG. 8. The bus is represented by a thick line in FIG. 8. Connections between other components are merely examples for description, and shall not be construed as a limitation. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and can implement or perform the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is but is not limited to any storage medium that can be used to carry or store program code in a form of an instruction or a data structure and that can be read and/or written by a computer (for example, the communication apparatus described in this application). The memory in this embodiment of this application may alternatively be a circuit or any other apparatus that can implement a storage function, and is configured to store the program instructions and/or the data.

For example, the processor 820 is mainly configured to process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 820 may read the software program in the memory 830, interpret and execute instructions of the software program, and process the data of the software program. When data needs to be sent wirelessly, the processor 820 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave via the antenna. When data is sent to the communication apparatus, the radio frequency circuit receives a radio frequency signal via the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in this embodiment of this application may further have more components than those in FIG. 8, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 7, the processing unit 701 may be one or more logic circuits. The transceiver unit 702 may be an input/output interface that is also referred to as a communication interface, an interface circuit, an interface, or the like. Alternatively, the transceiver unit 702 may be a sending unit and a receiving unit, where the sending unit may be an output interface, the receiving unit may be an input interface, and the sending unit and the receiving unit are integrated into one unit, for example, an input/output interface. As shown in FIG. 9, the communication apparatus shown in FIG. 9 includes a logic circuit 901 and an interface 902. In other words, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform the methods, the functions, or the steps performed by the receive end, the interface 902 is configured to obtain first indication information. The logic circuit 901 is configured to update a value of a first variable maintained by an entity of the communication apparatus to be greater than a maximum serial number. Alternatively, the logic circuit 901 is configured to update a value of a first variable maintained by an entity of the communication apparatus to be equal to a maximum serial number.

In a possible implementation, the logic circuit 901 is further configured to: when the value of the first variable is updated to be greater than the maximum serial number, discard a data unit whose serial number is less than the value of the first variable; or when the value of the first variable is updated to be equal to the maximum serial number, discard a data unit whose serial number is less than or equal to the value of the first variable.

In a possible implementation, the logic circuit 901 is specifically configured to: update the value of the first variable maintained by the entity of the communication apparatus to a serial number that is greater than the maximum serial number and that is of a 1^{st} data unit whose reassembly is not completed; or update the value of the first variable maintained by the entity of the communication apparatus to a serial number that is greater than the maximum serial number and that is of a 1^{st} discontinuous data unit not delivered to an upper layer.

In a possible implementation, the logic circuit 901 is specifically configured to input the first indication information via the interface 902.

In a possible implementation, the logic circuit 901 is specifically configured to: determine to discard one or more data units, and determine the first indication information.

In a possible implementation, the logic circuit 901 is further configured to: obtain a serial number of a discarded data unit set; and determine a maximum serial number of a plurality of data units based on the serial number of the discarded data unit set.

In a possible implementation, the interface 902 is further configured to output second indication information.

For example, when the communication apparatus is configured to perform the methods, the functions, or the steps performed by the terminal device, the logic circuit 901 is configured to trigger a BSR when a data unit set is discarded; and the interface 902 is configured to output the BSR.

It may be understood that the communication apparatus described in this embodiment of this application may implement the methods provided in embodiments of this application in a form of hardware, or may implement the methods provided in embodiments of this application in a form of software. This is not limited in this embodiment of this application.

For specific implementations of embodiments shown in FIG. 9, refer to the foregoing embodiments. Details are not described herein again.

An embodiment of this application further provides a wireless communication system. The wireless communication system includes a transmit end and a receive end. The transmit end and the receive end may be configured to perform the method in any one of the foregoing embodiments (as shown in FIG. 4, Example 1 to Example 3, and FIG. 6). Alternatively, for the transmit end and the receive end, refer to the communication apparatuses shown in FIG. 7 to FIG. 9.

In addition, this application further provides a computer program. The computer program is used to implement operations and/or processing performed by the receive end in the methods provided in this application.

This application further provides a computer program. The computer program is used to implement operations and/or processing performed by the terminal device in the methods provided in this application.

This application further provides a computer-readable storage medium. The computer-readable storage medium stores computer code. When the computer code is run on a computer, the computer is enabled to perform operations and/or processing performed by the receive end in the methods provided in this application.

This application further provides a computer-readable storage medium. The computer-readable storage medium stores computer code. When the computer code is run on a computer, the computer is enabled to perform operations and/or processing performed by the terminal device in the methods provided in this application.

This application further provides a computer program product. The computer program product includes computer code or a computer program. When the computer code or the computer program is run on a computer, operations and/or processing performed by the receive end in the methods provided in this application are/is performed.

This application further provides a computer program product. The computer program product includes computer code or a computer program. When the computer code or the computer program is run on a computer, operations and/or processing performed by the terminal device in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement, to achieve technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining, by a receive end, first indication information, wherein the first indication information indicates a maximum serial number of one or more data units that are discarded; and
updating a value of a first variable maintained by an entity at the receive end to be greater than the maximum serial number, wherein the first variable indicates that a data unit whose serial number is greater than or equal to the value of the first variable is to be processed by the entity at the receive end; or
updating a value of a first variable maintained by an entity at the receive end to be equal to the maximum serial number, wherein the first variable indicates that a data unit whose serial number is greater than the value of the first variable is to be processed by the entity at the receive end.

2. The method according to claim 1, wherein the method further comprises:
when the value of the first variable is updated to be greater than the maximum serial number, discarding a data unit whose serial number is less than the value of the first variable; or
when the value of the first variable is updated to be equal to the maximum serial number, discarding a data unit whose serial number is less than or equal to the value of the first variable.

3. The method according to claim 1 or 2, wherein the updating a value of a first variable maintained by an entity at the receive end to be greater than the maximum serial number comprises:
updating the value of the first variable maintained by the entity at the receive end to a serial number that is greater than the maximum serial number and that is of a 1^{st} data unit whose reassembly is not completed; or
updating the value of the first variable maintained by the entity at the receive end to a serial number that is greater than the maximum serial number and that is of a 1^{st} discontinuous data unit not delivered to an upper layer.

4. The method according to any one of claims 1 to 3, wherein that the first variable indicates that a data unit whose serial number is greater than or equal to the value of the first variable is to be processed by the entity at the receive end comprises:
the first variable indicates that the data unit whose serial number is greater than or equal to the value of the first variable is to be reassembled by the entity at the receive end; or
the first variable indicates that the data unit whose serial number is greater than or equal to the value of the first variable is to be delivered by the entity at the receive end to the upper layer.

5. The method according to any one of claims 1 to 4, wherein the obtaining, by a receive end, first indication information comprises:
receiving, by the receive end, the first indication information.

6. The method according to any one of claims 1 to 4, wherein the obtaining, by a receive end, first indication information comprises:
determining, by the receive end, to discard the one or more data units, and determining the first indication information.

7. The method according to any one of claims 1 to 6, wherein that the first indication information indicates a maximum serial number of one or more data units that are discarded comprises: the first indication information indicates a serial number of a data unit set to which the one or more data units that are discarded belong.

8. The method according to claim 7, wherein the method further comprises:
obtaining a serial number of a discarded data unit set; and
determining a maximum serial number of the plurality of data units based on the serial number of the discarded data unit set.

9. The method according to any one of claims 1 to 8, wherein the entity at the receive end comprises at least one of a packet data convergence protocol PDCP entity and a radio link control RLC entity.

10. The method according to any one of claims 1 to 9, wherein that the first indication information indicates a maximum serial number of one or more data units that are discarded comprises: the first indication information indicates a maximum sequence number SN of the one or more data units that are discarded, or the first indication information indicates a maximum count value of the one or more data units that are discarded.

11. The method according to any one of claims 6 to 10, wherein the method further comprises:
sending, by the entity at the receive end, second indication information, wherein the second indication information indicates an entity at a transmit end to discard the one or more data units, or the second indication information indicates an entity at a transmit end to discard a data unit set corresponding to the one or more data units.

12. A communication apparatus, wherein the apparatus comprises:
a processing unit, configured to obtain first indication information, wherein the first indication information indicates a maximum serial number of one or more data units that are discarded, wherein
the processing unit is further configured to update a value of a first variable maintained by an entity of the communication apparatus to be greater than the maximum serial number, wherein the first variable indicates that a data unit whose serial number is greater than or equal to the value of the first variable is to be processed by the entity of the communication apparatus; or
the processing unit is further configured to update a value of a first variable maintained by an entity of the communication apparatus to be equal to the maximum serial number, wherein the first variable indicates that a data unit greater than the value of the first variable is to be processed by the entity of the communication apparatus.

13. The apparatus according to claim 12, wherein
the processing unit is further configured to: when the value of the first variable is updated to be greater than the maximum serial number, discard a data unit whose serial number is less than the value of the first variable; or when the value of the first variable is updated to be equal to the maximum serial number, discard a data unit whose serial number is less than or equal to the value of the first variable.

14. The apparatus according to claim 12 or 13, wherein
the processing unit is specifically configured to: update the value of the first variable maintained by the entity of the communication apparatus to a serial number that is greater than the maximum serial number and that is of a 1^{st} data unit whose reassembly is not completed; or update the value of the first variable maintained by the entity of the communication apparatus to a serial number that is greater than the maximum serial number and that is of a 1^{st} discontinuous data unit not delivered to an upper layer.

15. The apparatus according to any one of claims 12 to 14, wherein the first variable indicates that the data unit whose serial number is greater than or equal to the value of the first variable is to be reassembled by the entity of the communication apparatus; or the first variable indicates that the data unit whose serial number is greater than or equal to the value of the first variable is to be delivered by the entity of the communication apparatus to the upper layer.

16. The apparatus according to any one of claims 12 to 15, wherein the apparatus further comprises a transceiver unit, wherein
the processing unit is specifically configured to receive the first indication information via the transceiver unit.

17. The apparatus according to any one of claims 12 to 15, wherein
the processing unit is specifically configured to: determine to discard the one or more data units, and determine the first indication information.

18. The apparatus according to any one of claims 12 to 17, wherein that the first indication information indicates a maximum serial number of one or more data units that are discarded comprises: the first indication information indicates a serial number of a data unit set to which the one or more data units that are discarded belong.

19. The apparatus according to claim 18, wherein
the processing unit is further configured to: obtain a serial number of a discarded data unit set; and determine a maximum serial number of the plurality of data units based on the serial number of the discarded data unit set.

20. The apparatus according to any one of claims 12 to 19, wherein the entity of the communication apparatus comprises at least one of a packet data convergence protocol PDCP entity and a radio link control RLC entity.

21. The apparatus according to any one of claims 12 to 20, wherein that the first indication information indicates a maximum serial number of one or more data units that are discarded comprises: the first indication information indicates a maximum sequence number SN of the one or more data units that are discarded, or the first indication information indicates a maximum count value of the one or more data units that are discarded.

22. The apparatus according to any one of claims 17 to 21, wherein
the transceiver unit is further configured to send second indication information, wherein the second indication information indicates an entity at a transmit end to discard the one or more data units, or the second indication information indicates an entity at a transmit end to discard a data unit set corresponding to the one or more data units.

23. A communication apparatus, comprising a processor and a memory, wherein
the memory is configured to store instructions; and
the processor is configured to execute the instructions, so that the method according to any one of claims 1 to 11 is performed.

24. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 11 is performed.

25. A computer-readable storage medium, wherein the computer-readable storage medium is configured to store a computer program, and when the computer program is executed, the method according to any one of claims 1 to 11 is performed.
